(19) **Europäisches Patentamt / European Patent Office / Office européen des brevets**

(11) **EP 4 745 896 A1**

(12) **EUROPEAN PATENT APPLICATION**

(43) Date of publication:
20.05.2026 Bulletin 2026/21

(21) Application number: 25209901.5

(22) Date of filing: 20.10.2025

(51) International Patent Classification (IPC):
*G06T 11/00* (2026.01)

(52) Cooperative Patent Classification (CPC):
**G06T 11/00;** G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 13.11.2024 GR 20240100804

(71) Applicant: Samsung Electronics Co., Ltd.
Suwon-si, Gyeonggi-do 16677 (KR)

(72) Inventors:
• YANG, Haosen
Chertsey KT16 0RS (GB)
• BULAT, Adrian
Chertsey KT16 0RS (GB)
• HADJI, Isma
Chertsey KT16 0RS (GB)
• PHAM, Hai Xuan
Chertsey KT16 0RS (GB)
• TZIMIROPOULOS, Georgios
Chertsey KT16 0RS (GB)
• ALONSO, Brais Martinez
Chertsey KT16 0RS (GB)

(74) Representative: Appleyard Lees IP LLP
G Mill
Dean Clough Industrial Park
Halifax HX3 5AH (GB)

(54) **METHOD FOR ADAPTING TRAINED GENERATIVE MACHINE LEARNING MODELS**

(57) Broadly speaking, embodiments of the present techniques provide a method for adapting trained generative machine learning, ML, models to produce high-quality and high-resolution images, even when the models were trained using training images of a lower resolution. The generative model may be any diffusion-based model.

Adapting a trained generative ML model

FIGURE 6

**Description**

**Field**

The present application generally relates to a method for adapting trained generative machine learning, ML, models In particular, the present application provides a method to adapt trained generative diffusion-based models, without additional training, to generate high resolution images which have a higher resolution than a native resolution of the models.

**Background**

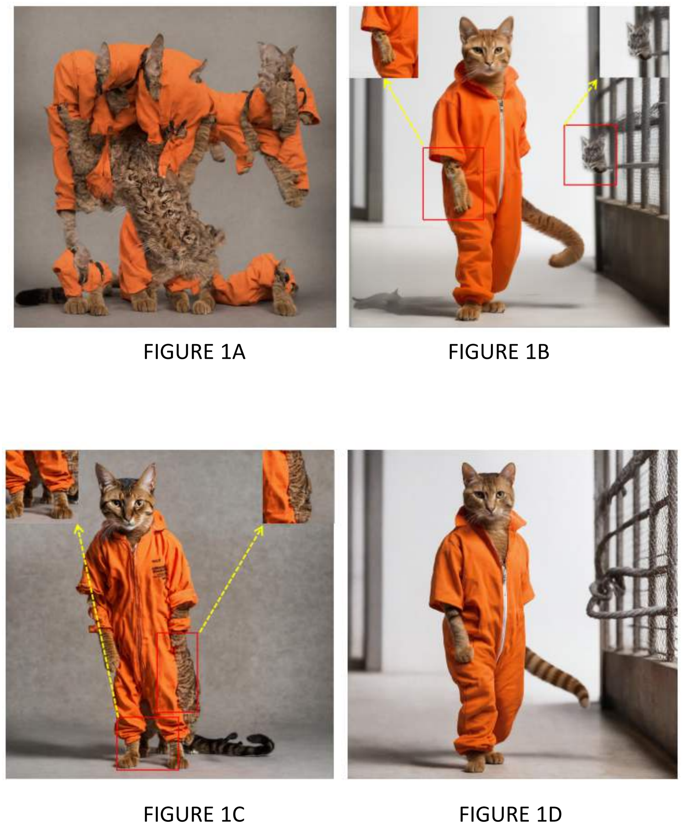

Diffusion models demonstrate impressive generative power across a range of applications. While powerful, one known shortcoming of diffusion models is their inability to seamlessly scale to higher resolutions beyond the one used during training. It is known that directly generating images at resolutions beyond the training resolution results in severe object repetition and unrealistic local patterns. This is illustrated in Figure 1A. While retraining diffusion models on higher-resolution images is a straightforward solution, the computational demands quickly become prohibitive. This restricts applications requiring flexible or high-resolution image generation, e.g. 4K. Therefore, adapting pre-trained diffusion models to generate high-resolution images without additional training is a topic of high interest that we tackle in this work.

Prior efforts addressing this important problem can be largely categorized into two tracks. The first set of approaches propose mechanisms that improve the global structure consistency by steering the high-resolution generation using the image generated at native (i.e. training) resolution. However, the effectiveness of such mechanisms is mixed, with trailing issues like poor detail quality, inconsistent local textures, and even persisting pattern repetitions as shown in Figure 1B. Furthermore, these works typically operate on a patch-based basis, generating one patch at a time. Concretely, this means that these methods resort to redundant and overlapping forward passes, leading to large latency overheads. The second group of approaches eschews patch-based generation in favor of a one-pass approach by directly altering the model architecture. This leads to faster generation, but unfortunately, it comes at the cost of image quality, as shown in Figure 1C.

The present applicant has therefore identified the need to adapt diffusion models so that they can generate images of a resolution higher than the resolution used during training of the models.

**Summary**

In a first approach of the present techniques, there is provided a computer-implemented method for generating, on an electronic device, high-resolution images using a trained diffusion-based generative machine learning, ML, model, the method comprising: obtaining a text prompt to generate an image, and a first noisy image; generating a first image according to the text prompt and at an initial (native) resolution (i.e. a denoised image at the native/initial resolution), by denoising the first noisy image using the trained generative ML model over a plurality of first denoising timesteps, wherein the trained generative ML model has been trained using images having the initial resolution; upsampling, using an upsampling module, the generated first image to produce a second image having a target resolution, wherein the target resolution is higher than the initial resolution; adding noise to the second image using the trained generative ML model over a plurality of noising timesteps, to generate a second noisy image at the second target resolution, by: adding noise to a latent representation of the second image generated at a previous noising timestep; and storing the noised latent representation; and generating a third image at the target resolution (i.e. a denoised image at the higher, target resolution), by: denoising the second noisy image using the trained generative ML model over a plurality of second denoising timesteps, wherein each second denoising timestep corresponds to a noising timestep, and during each second denoising timestep, ensuring global structural features in the second image are maintained, wherein the global structural features are obtained from the stored noised latent representation for the corresponding noising timestep.

Advantageously, the present techniques provide a simple, training-free way to enable a trained diffusion-based generative ML model to generate images (single images, or frames for videos) that have an image resolution that is higher than the resolution the model has been trained to produce. This is useful because it enables existing trained models to be adapted to produce higher resolution images without having to undergo a time-consuming and computationally-expensive retraining process. That is, once the trained model has been deployed on electronic devices (such as smartphones and laptops), it is undesirable to have to retrain the model to produce higher resolution images.

Furthermore, the present techniques advantageously overcome the problems with the existing techniques, namely that of repetitive patterns and structural distortions. When existing models attempt to generate images at a higher resolution than the resolution the model was trained to produce, the resulting images contain artifacts, repeated features and distortions. These arise because the model does not know how to 'fill' the additional pixels of the higher resolution, and can simply add in duplicate features. For example, if a user wished to generate an image showing a boy on a grass field kicking a football, the model may generate a higher resolution image that shows the boy having excess limbs, or having multiple footballs. This is clearly undesirable and leads to poor quality higher resolution images. The present techniques overcome these issues in two ways. Firstly, the present techniques utilise a mechanism to ensure that global structural features or information are maintained between an image generated at an initial resolution (i.e. a resolution the model is trained to generate) and the final image at the higher target resolution (i.e. a resolution higher than what the model is trained to generate). This ensures that, for example, the boy has only two arms and two legs, and that there is a single football. Secondly, the present techniques utilise a mechanism to ensure that local structural features appear in the right places in the final image. This ensures that, for example, the texture or colours of the football appear on the football and not on the boy's clothes or on the field. These two methods will be described in more detail below and with reference to the Figures. Advantageously, the two methods do not require any changes to the trained model itself - instead, these methods are implemented via modules that control the inputs into the model during the image generation process.

Diffusion models are a class of generative machine learning, ML, models which learn a diffusion process that generates a probability distribution of a given dataset. Diffusion models are used to generate new data samples based on the data they have been trained on. For example, a diffusion model that has been trained on an image dataset depicting human faces can generate new images of human faces with various features and expressions, even if those new faces were not present in the original training dataset. Diffusion models have shown impressive performance in various image generation tasks, including image super-resolution and restoring missing areas of an image.

Diffusion models have three main components: a forward process, a reverse process, and a sampling process. During the forward process (also known as forward diffusion, or simply diffusion process), the model applies a sequence of transformations to diffuse samples in a training dataset (having a 'complex' distribution) until a desired simple data points distribution is reached. Each step in the process introduces more simplicity until all that is left is simple noise with original patterns obscured by this noise. An example of this noisy, simple, distribution may be a white noise distribution, or the noise may be distributed in any other way. During the reverse process (also known as reverse diffusion or denoising), the model generates a sample from the simple data points distribution, and then maps it back to a complex distribution by inverting the transformations. The diffusion model uses a conditioning, or prompt, to generate an image using the reverse process. That is, the conditioning is used to guide the denoising process and determine the content of the final image. **In** this way, diffusion models can generate new data samples by starting from a point in the simple distribution and diffusing it step-by-step to the desired complex data distribution. The whole training process can be thought of as destroying the training dataset samples through the successive addition of Gaussian noise, and learning to recover the data by reversing this noising process (i.e. denoising). Once trained, new samples can be generated by passing randomly sampled noise through the learned denoising process. This is the sampling process (i.e. new sample generation process).

The present techniques comprise adapting a trained diffusion model. The diffusion model may have been trained, using the process described above, to generate images using prompts (e.g. text prompts). The diffusion model may have been trained on a server. The diffusion model may comprise a plurality of linear layers for performing simple linear transformations on inputs. The linear layers may be feed-forward layers.

The term "initial resolution" is used herein to mean a (maximum) native resolution of the trained diffusion model. The diffusion model may have been trained using images having this initial resolution and as such, has learned how to generate images at this initial resolution. For example, the initial resolution may be 512 x 512 pixels, 768 x 768 pixels, or 1024 x 1024 pixels. **It** will be understood these are simply illustrative example values for the initial resolution, and are not limiting. The initial resolution is referred to herein as 1 x.

The terms "high resolution" and "target resolution" are used herein to mean a resolution that is higher than the initial / native resolution of the trained diffusion model. The target resolution may be higher in one dimension or both dimensions. For example, the target resolution may be 2 x 2, 3 x 3, or 4 x 4 times larger than the initial resolution, meaning that the generated image has twice, three times or four times the number of pixels in both dimensions. In another example, the target resolution may be 2 x 4 larger than the initial resolution, meaning that the generated image has twice the number of pixels in one dimension, and four times the number of pixels in the other dimension. It will be understood these are simply illustrative example values for the target resolution, and are not limiting.

The term "upsampling" is used herein to mean increasing the resolution of an image. The term "upsampling module" is used herein to mean any module, function or routine for performing the upsampling.

The term "latent representation" is used herein to mean a representation of important features of an image, which is also sometimes referred to as an embedding. A latent representation or embedding is a representation of values or objects, like text, images or audio, that can be understood and processed by machine learning models. A latent representation or embedding usually takes the form of a vector, and thus the terms "latent representation", "embedding" and "embedding vector" are used interchangeably herein. An embedding is therefore a mathematical representation of a data item (e.g. text, image, video, audio, etc.), and may represent some or all of the content of the data item. For example, an embedding may represent the semantic meaning of a data item. Embeddings make it possible for machine learning models to understand the relationships between different data items. Embeddings are normally analysed within embedding space or latent space, i.e. a mathematical space in which similar items are positioned closer to one another than less similar items. For example, if embedding A for data item A is close to embedding B for data item B in embedding space, then data item A and data item B are similar in some way.

The terms "global structural features" and "global structural information" are used interchangeably herein to mean high-level features of an image. For example, in the above-mentioned example, the global structural features may include the features of a human boy (e.g. head, torso, two arms, two legs, etc), a ball, and a field, as well as the structural or positional relationships between them (e.g. the arms are connected to the torso and not to the ball). The global structural features could also include colour information, patterns, textures, and so on. For example, in the above-mentioned example, the global structural features may include the colour of the field. It will be understood that the exact nature of the global structural features will vary for each image. Ultimately, the global structural features are low frequency features which do not change across an image. One way to think about this is to consider which details would disappear if an image were, for instance, downsized or blurred heavily. (Imagine a person with bad eyesight removing their glasses and looking at the image: what would they still be able to see when the image appears blurry to them?) Effectively, the features which remain are the low frequency features, which are referred to herein as "global structural information", and the features which are lost are the high frequency features, which are referred to herein as "local textural information".

The terms "local structural features", "local structural information" and "local textural features" are used interchangeably herein to mean low-level features of an image, such as colour, texture, and so on. For example, in the above-mentioned example, the local structural features may include the colour of the ball, the texture of the grass, etc. It will be understood that the exact nature of the local structural features will vary for each image. As explained above, the local structural features are high frequency features which change across an image, and which may disappear if an image were downsized or heavily blurred.

Preferably, the method further comprises: displaying the generated third image on a display of the electronic device. The target resolution may be the same as a resolution of the display of the electronic device.

Generating the third image may comprise, at each second denoising timestep of the plurality of second denoising timesteps, the following further steps: generating, using a frequency modulation module, a frequency-modulated version of the second noisy image, wherein the frequency modulation module ensures global structural features are maintained; and inputting the frequency-modulated version of the second noisy image into the trained generative ML model for denoising. The frequency modulation, FM, module is any module, function or routine which is able to produce a frequency-modulated version of the second noisy image. In this way, the FM module controls what is input into the trained generative ML model during the second denoising steps, and therefore, helps to ensure that global structural features are maintained during the second denoising.

Specifically, at each second denoising timestep, generating a frequency-modulated version of the second noisy image may comprise: inputting the stored noised latent representation of the corresponding noising timestep and the denoised latent representation of the second denoising timestep into the frequency modulation, FM, module. To enable the FM module to maintain global structural features, it needs to know what these features are. Therefore, prior to each second denoising timestep, the FM module is given the stored noised latent representation from the corresponding noising timestep because this includes the global structural features from the upsampled second image. This is because the second image is generated by simply upsampling the first image, and so maintains the structural information (local and global). The FM module is also given the denoised latent representation, so that the FM module can effectively affect how the trained ML model denoises the denoised latent representation to ensure the global structural information is maintained during the denoising. It is important that the two inputs into the FM module correspond to the same timesteps to ensure that the denoising occurs smoothly. That is, the T-th noised latent representation is input together with the T-th denoised latent representation.

At each second denoising timestep, generating a frequency-modulated version of the latent representation may comprise: applying a low-pass filter to the stored noised latent representation of the corresponding noising timestep, to retain low-frequency components of the stored noisy latent representation, wherein the low-frequency components correspond to global structural features in the second image. The low-pass filter is part of the FM module and is applied to the stored noisy latent representation (obtained from the second image). The low-pass filter is used to identify the low-frequency components (effectively of the second image), so that these components can be maintained during the current second denoising timestep by the trained ML model.

At each second denoising timestep, generating a frequency-modulated version of the latent representation may comprise: applying a high-pass filter to the denoised latent representation of the second denoising timestep, to retain high-frequency components of the denoised latent representation, wherein the high-frequency components correspond to local structural features in the second image. The high-pass filter is part of the FM module and is applied to the denoised latent representation that is to be processed by the trained ML model during the current second denoising timestep. The high-pass filter is used to identify the high-frequency components (effectively from the previous denoising step), so that these components can be maintained during the current second denoising timestep by the trained ML model. In other words, it is desirable to maintain the high-frequency components generated during the previous denoising step in the current denoising step, because these have been generated by the trained ML model during the denoising and are likely important local structural features. Thus, these high-frequency components from the denoising are maintained as well as the low-frequency components from the noising process.

The high-pass filter may be used to retain local structural features such as, for example: colour information; texture information; pattern information. It will be understood that these are non-limiting examples of local structural features. As explained above, broadly speaking, local structural features are high frequency features which change across an image and are likely to disappear if the image were downsized or made blurry. For example, the colour green of a field may remain in an image if it were downsized, but the texture of the field (e.g. the blades of grass) may be lost.

At each second denoising timestep, generating a frequency-modulated version of the latent representation may comprise: combining the retained low-frequency components of the stored noised latent representation and the retained high-frequency components of the denoised latent representation, to generate the frequency-modulated version of the latent representation of the second noisy image. Thus, to ensure that the high-frequency components generated during the previous denoising step and the low-frequency components from the noising process are maintained, the retained components may be combined, such as by summing.

Prior to generating a frequency-modulated version of the second noisy image, the method may comprise: converting, using a Fast Fourier Transform, FFT, the stored noised latent representation of the corresponding noising timestep and the denoised latent representation of the second denoising timestep into a Fourier domain. An FFT is an algorithm for converting a signal from its original domain (e.g. image / pixel space) to a representation in the frequency domain. This helps to perform the frequency modulation steps, as the high and low frequency components (i.e. local and global structural information) are more easily discernible in the frequency domain than in the original domain.

Preferably, prior to inputting the frequency-modulated version of the second noisy image into the trained generative ML model for denoising, the method may comprise: applying an inverse Fast Fourier Transform to the generated frequency-modulated version of the latent representation of the second noisy image. Thus, the reverse of the FFT process may be performed to convert the summed components back into a form that the trained ML model is able to understand.

As mentioned above, the FM module ensures that global structural features are maintained between the noising and second denoising processes (e.g. number of footballs). The FM module also ensures that local structural features are maintained between timesteps of the second denoising process (e.g. colour, shape and texture of the football). However, the trained ML model may not understand how those local structural features fit in with the global structural features (e.g. whether the colour of the football only applies to the football or also to the boy). Thus, to ensure that the local structural features and global structural features are correctly merged in the generated third image, it is necessary to control where the trained ML model adds the local structural features in the third image. To do this, the present techniques utilise an attention modulation, AM, module. The attention modulation, AM, module is any module, function or routine which is able to cause the trained ML model to pay attention to where the local structural features should appear in the third image.

The step of generating the first image by denoising the first noisy image may comprise: generating, at each first denoising timestep, an attention map at the initial resolution, wherein each attention map guides the trained generative ML model to focus on particular parts of the first noisy image; and storing the generated attention maps. "Attention" is a well-known mechanism in machine learning that determines the importance of each component in a sequence relative to other components in the sequence. This is used in image processing to determine which features of an image or regions of an image are most relevant to the image processing task. The term "attention map" is used herein to mean a heatmap which encodes relationships between features. An input tensor X is projected into two tensors (a keys tensor K, and a values tensor V), which semantic abstractions of the input tensor at specific spatial locations, and usually have the same dimensionality as X. If there are n input tokens, then an attention matrix A is n x n. The value at positions i,j is computed as the cosine similarity between K at spatial position i and V at spatial position j. Intuitively speaking, the attention matrix (i.e. map) tells you how semantically similar the features at position i are to the features at position j (thus it captures pairwise relationships more than task relationship)..

Prior to storing, the method may further comprise: upsampling, using the upsampling module, the generated attention maps at the initial resolution to produce upsampled attention maps having the target resolution. This may ensure that the upsampled attention maps are useable by the attention modulation module, because they are of the right size/dimension.

At each second denoising timestep of the plurality of denoising timesteps, the process of generating the third image may comprise: generating an attention map at the target resolution; and incorporating, using an attention modulation module, information from the stored upsampled attention map from a corresponding first denoising timestep into the generated attention map at the target resolution, to thereby transfer local structural features from the first image to the third image. That is, a new attention map is generated by the attention modulation module, by performing attention on the second denoising latent representation prior to further processing by the trained ML model. Attention is a standard process in diffusion models, and therefore, the attention process is effectively modified so that information from the native resolution attention map is included when the attention at the high resolution is being performed by the ML model. This means the attention modulation module is simply a modified part of the usual attention part of the ML model. Then, information from an upsampled attention map generated for a corresponding first denoising timestep is incorporated into the new generated attention map, so that the new attention map includes the attention information from the original denoising process that was used to generate the first image. There are multiple points within the denoising performed by the ML model where attention is performed. This means that the attention performed by layer L for the native resolution feeds into the attention performed by layer L for the high resolution, and so on.

As explained in more detail with reference to the Figures, the trained generative ML model comprises a plurality of layers. The method may further comprise: incorporating information from the stored upsampled attention map into the generated attention map during processing by a subset of the plurality of layers of the trained generative ML model. That is, the attention mechanism employed by layers of the trained ML model may be modified by the attention modulation module.

In some cases, the trained generative ML model may comprise a U-Net. A U-Net is a convolutional neural network architecture that was developed for image segmentation but is also used in diffusion models for iterative image denoising. In such cases, incorporating information from the stored upsampled attention map during processing by a subset of the plurality of layers of the trained generative ML model may comprise incorporating information from the stored upsampled attention map during processing by a subset of the plurality of layers in up-blocks of the U-Net.

The present techniques are described with reference to generating high resolution single/static images, but it will be understood that the present techniques can also be applied to the generation of high resolution videos. In the case of videos, the present techniques may operate on a frame-by-frame basis.

Thus, obtaining a text prompt to generate an image may comprise obtaining a text prompt to generate a single image. In this case, generating a third image at the target resolution may comprise generating a single image.

Alternatively, obtaining a text prompt to generate an image may comprise obtaining a text prompt to generate a video comprises a plurality of frames. **In** this case, generating a third image at the target resolution may comprise generating a plurality of frames.

In a second approach of the present techniques, there is provided an electronic device for generating high-resolution images using a trained diffusion-based generative machine learning, ML, model, the electronic device comprising: at least one processor coupled to memory, for: obtaining a text prompt to generate an image, and a first noisy image; generating a first image according to the text prompt and at an initial resolution, by denoising the first noisy image using the trained generative ML model over a plurality of first denoising timesteps, wherein the trained generative ML model has been trained using images having the initial resolution; upsampling, using an upsampling module, the generated first image to produce a second image having a target resolution, wherein the target resolution is higher than the initial resolution; adding noise to the second image using the trained generative ML model over a plurality of noising timesteps, to generate a second noisy image at the second target resolution, by: adding noise to a latent representation of the second image generated at a previous noising timestep; and storing the noised latent representation in storage on the electronic device; and generating a third image at the target resolution, by: denoising the second noisy image using the trained generative ML model over a plurality of second denoising timesteps, wherein each second denoising timestep corresponds to a noising timestep, and during each second denoising timestep, ensuring global structural features in the second image are maintained, wherein the global structural features are obtained from the stored noised latent representation for the corresponding noising timestep.

The features described above with respect to the first approach apply equally to the second approach and therefore, for the sake of conciseness are not repeated.

As explained above, generating the third image may comprise, at each second denoising timestep of the plurality of second denoising timesteps: generating, using a frequency modulation module, a frequency-modulated version of the second noisy image, wherein the frequency modulation module ensures global structural features are maintained; and inputting the frequency-modulated version of the second noisy image into the trained generative ML model for denoising.

As explained above, generating the first image by denoising the first noisy image may comprise: generating, at each first denoising timestep, an attention map at the initial resolution, wherein each attention map guides the trained generative ML model to focus on particular parts of the first noisy image; and storing the generated attention maps in the storage.

Generating the third image may comprise, at each second denoising timestep of the plurality of denoising timesteps: generating an attention map at the target resolution; and incorporating, using an attention modulation module, information from the stored attention map from a corresponding first denoising timestep into the generated attention map at the target resolution, to thereby transfer local structural features from the first image to the third image.

The memory may store instructions that, when executed by the at least one processor individually or collectively, cause the at least one processor to perform the methods described herein.

The electronic device may be a smart device. The electronic device may be a smartphone. A smartphone is an example of a smart device. The electronic device may be a smart appliance. A smart appliance is another example of a smart device. An example of a smart appliance is a smart television (TV), a smart fridge, a smart oven, a smart vacuum cleaner, a smart robotic device, a smart lawn mower, and so on. More generally, the electronic device may be a constrained-resource device, but which has the minimum hardware capabilities to use a trained generative ML model.

The electronic device may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge, smart vacuum cleaner, smart lawn mower, smart oven, etc). It will be understood that this is a non-exhaustive and non-limiting list of example devices.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of the drawings**

Implementations of the present techniques will now be described, by way of example only, with reference to the accompanying drawings, in which:

Figures 1A to 1C show the limitations of existing techniques to generate high resoluton images;
Figure 1D shows example results of the present techniques when generating high resolution images;
Figure 2A is a block diagram illustrating how existing image generation models operate (left), and how the present techniques adapt the capabilities of existing models at inference time (right);
Figure 2B is a simplified flowchart of example steps to implement the present techniques;
Figures 3A to 3C are schematic diagrams showing overviews of the FAM diffusion method of the present techniques;
Figures 4A to 4E show ablation on the components of FAM diffusion;
Figure 5A shows a standard text-to-image generation pipeline;
Figure 5B shows a modified text-to-image generation pipeline for the FAM diffusion process of the present techniques;
Figure 6 is a flowchart of example steps for generating high-resolution images using a pre-existing trained diffusion-based generative machine learning, ML, model;
Figure 7 is a schematic diagram illustrating the Frequency Modulation process;
Figure 8 is a block diagram showing example steps for generating a frequency-modulated version of a latent representation during each second denoising timestep;
Figure 9 is a schematic diagram illustrating the Attention Modulation process;
Figure 10A shows a standard attention pipeline;
Figure 10B shows a modified attention pipeline for the FAM diffusion process of the present techniques;
Figure 11A is a table showing results of system-level comparisons with SDXL;
Figure 11B is a table showing results of system-level comparisons with SDXL at different aspect ratios;
Figure 12 shows a comparison between images generated using constant low-frequency information (left) and time-aware low-frequency information (right);
Figure 13 visualises the self-attention maps of tokens from a specific area of an image; and
Figure 14 is a block diagram of an electronic device for adapting a trained generative ML model to generate high-resolution images.

**Detailed description of the drawings**

Broadly speaking, embodiments of the present techniques provide a method for adapting trained generative machine learning, ML, models to produce high-quality and high-resolution images, even when the models were trained using training images of a lower resolution. The generative model may be any diffusion-based model.

Generally speaking, image generation is based on a user-provided description of the desired content of the image, typically expressed in natural language (referred to as a "text prompt"). While the present techniques seek to improve the image generation process, but they can also be applied to other image generation technologies, such as image inpainting, image editing or image restoration. The present techniques assume that a pre-existing image generation model (diffusion model) exists on a user electronic device (e.g. smartphone, tablet or laptop), which the user can directly access in order to generate images. It will be understood that the present techniques can also operate on servers, i.e. where an image generation model runs on a server and is communicatively coupled to a user device (which provides text prompts and receives the generated images). In any case, such models are typically trained to generate images at specific resolutions. The present techniques extend the abilities of such an existing model to operate at flexible resolutions, i.e. at higher resolutions and/or different aspect ratios than those for which it was trained.

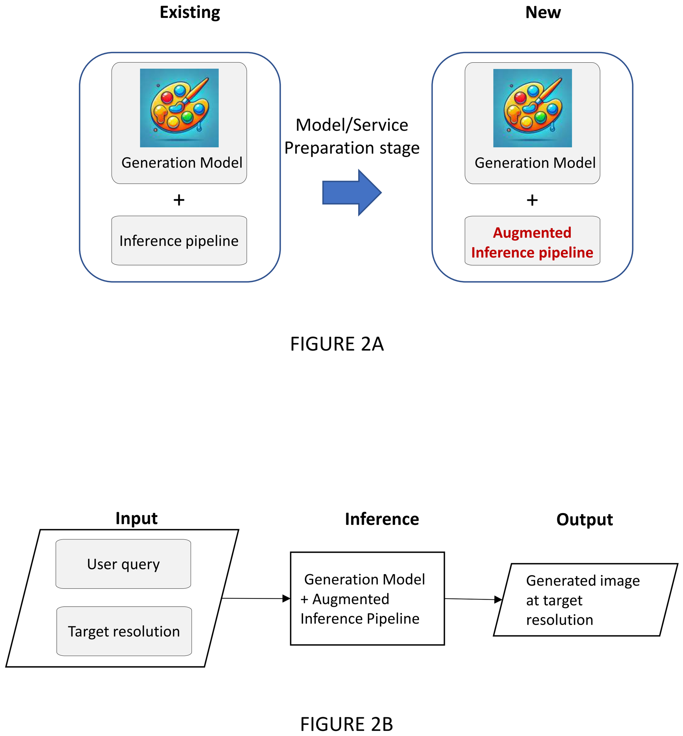

Figure 2A is a block diagram illustrating how existing image generation models operate (left), and how the present techniques adapt the capabilities of existing models at inference time (right). As mentioned above, it is assumed that the electronic device already has an image generation model (text-to-image) stored on it for use by a user. The image generation model is trained to output images within a *training resolution range.* The present techniques advantageously do not require any changes to the image generation model to be made. Instead, the image generation model is adapted for higher resolutions by simply applying change to the inference-time code, i.e. how the model is used at inference time to generate an image in response to a user-input text prompt. The result of the present techniques is that the existing model is able to generate images at resolutions *beyond* the training resolution range, e.g. 2x the previous maximum resolution.

Figure 2B is a simplified flowchart of example steps to implement the present techniques. As shown, the present techniques involve receiving a user query to generate an image (i.e. a text prompt), and a target resolution for the image. The present techniques utilise the trained generative ML model together with an augmented inference pipeline to generate the image according to the text prompt and the required target resolution. The generated image is then output for the user.

Diffusion models are proficient at generating high-quality images. As explained above, they are however effective only when operating at the resolution used during training. Inference at a scaled resolution leads to repetitive patterns and structural distortions. Retraining at higher resolutions quickly becomes prohibitive. Thus, methods enabling pre-existing diffusion models to operate at flexible test-time resolutions are highly desirable. Previous works suffer from frequent artifacts and often introduce large latency overheads. The present techniques provide two simple modules that combine to solve these issues. Firstly, a Frequency Modulation (FM) module is introduced, which leverages the Fourier domain to improve the global structure consistency. Secondly, an Attention Modulation (AM) module is introduced, which improves the consistency of local texture patterns, a problem largely ignored in prior works. The present techniques, coined "FAM diffusion", can seamlessly integrate into any latent diffusion model and requires no additional training. Extensive qualitative results highlight the effectiveness of the present method in addressing structural and local artifacts, while quantitative results show state-of-the-art performance. Also, the present method avoids redundant inference tricks for improved consistency such as patch-based or progressive generation, leading to negligible latency overheads

Figures 1A to 1C show the limitations of existing techniques, as explained above. Specifically, Figures 1A to 1C show comparisons of high resolution image generation at 3x the native/initial resolution of a generative model using, respectively, Direct Inference, DemoFusion, and HiDiffusion generative models. To address these limitations, the present techniques provide a straightforward yet effective approach that takes the best of both worlds. The present method follows the single pass generation strategy for improved latency but, like patch-based approaches, leverages the native resolution generation to steer the high-resolution one. Specifically, the present method starts by generating an image at native resolution conditioned on the input text prompt. Then, the method resorts to a test-time diffuse-denoise strategy, where the high-resolution denoising stage is guided by the native resolution diffusion process. However, instead of blindly steering the high-res image toward the low-res one as done elsewhere, the present techniques propose a Frequency Modulation (FM) module. In particular, the Fourier domain is leveraged to selectively condition low-frequency components during the high-resolution image generation stage, while providing full control over high-frequency components to the denoising process.

While the FM module resolves artifacts related to global consistency, artifacts related to inconsistent local texture might still be present, i.e. finer texture generated on semantically related parts of the image might be inconsistent. To tackle this second issue, largely ignored in the literature, the present techniques propose an Attention Modulation (AM) mechanism that leverages attention maps from the denoising process at native resolution to condition the attention maps of the denoising process at high resolution. Since attention maps at native resolution encode which regions of the image are semantically related, they regularize the high-res denoising towards consistent finer texture generation. The present method, coined **F**requency and **A**ttention **M**odulated diffusion (FAM diffusion), combines the FM and AM modules to yield superior quality results, as shown in Figure 1D.

Advantageously, the present method seamlessly integrates with any latent diffusion model without additional training or architectural changes. It is empirically shown that the present method significantly enhances the quality and efficiency of high-resolution image generation, establishing a new state-of-the-art.

Prior to explaining the details of the present techniques in detail, a brief overview of some existing techniques is provided for context.

Related works

Diffusion models have shown impressive performance in generating creative and accurate representations given text prompts. While early work was limited to generating relatively low-resolution images (i.e. $256 \times 256$), follow-up work showed that their performance can scale to higher resolutions, e.g. $512 \times 512$ with SD1.5 and $1024 \times 1024$ with SDXL. However, a major shortcoming with all these models is that generation remains limited by the resolution used at training time. Naively targeting higher train-time resolutions quickly results in prohibitive training costs and computational requirements, and the limited availability of high-resolution training data also restricts the diversity of image generation. Thus, adapting pre-trained diffusion models to generate high-resolution images without retraining has emerged as a topic of interest.

Early works proposed using overlapping patches at native resolution and blending the outputs to produce an image without seams. However, this leads to frequent repetitions and inconsistent global image structure. Therefore, subsequent works introduced various mechanisms to encourage global structural consistency. For instance, DemoFusion proposed a patch-based generation process with mechanisms such as skip residuals and progressive upsampling, while AccDiffusion used localized prompting to guide high-resolution generation and improve consistency with images generated at native resolutions. However, these methods still suffer from issues like local repetitions, and inconsistent global coherence. They also have significant latency overheads due to the running cost of multiple backward passes. To mitigate the high latencies, other works aim to generate high-resolution images in a single pass by modifying the architecture of the UNet. For example, one technique employs dilated convolutions to adjust the receptive field of convolutions in the denoising UNet. HiDiffusion introduces an alternative UNet that dynamically adjusts the feature map size during the denoising process. While these approaches achieve faster generation, they often result in image distortions.

More closely related to the present techniques are methods that have approached structural consistency from a frequency domain perspective. FouriScale splits the image in Fourier domain, then proceeds to incorporate a low-pass filtering operation and impose structural consistency with an image generated at native resolution. However, this splitting operation results in unrealistic images. Others decompose images into spatial frequency components conditioned on local and global prompts, but these often rely on redundant operations that lead to high latencies. Others leverage low-frequency information from the latent representation of the native image to provide desirable global semantics during the denoising process. However, these ignore the noise distribution differences between the current high-resolution denoising step and the native image in latent space. In addition, they still relies on patch-based denoising, making it inefficient. In contrast to these methods, the present techniques provide a one-pass method that does not alter the model architecture. Importantly, the present method introduces a complementary novel attention modulation mechanism, which targets local structure consistency; an issue overlooked by all existing works.

Method

The present techniques leverage pretrained latent diffusion models (LDMs), which have been extensively trained on large-scale high-quality data. The goal is to generate images at higher resolutions than the resolutions used during training, without any additional finetuning or model modification.

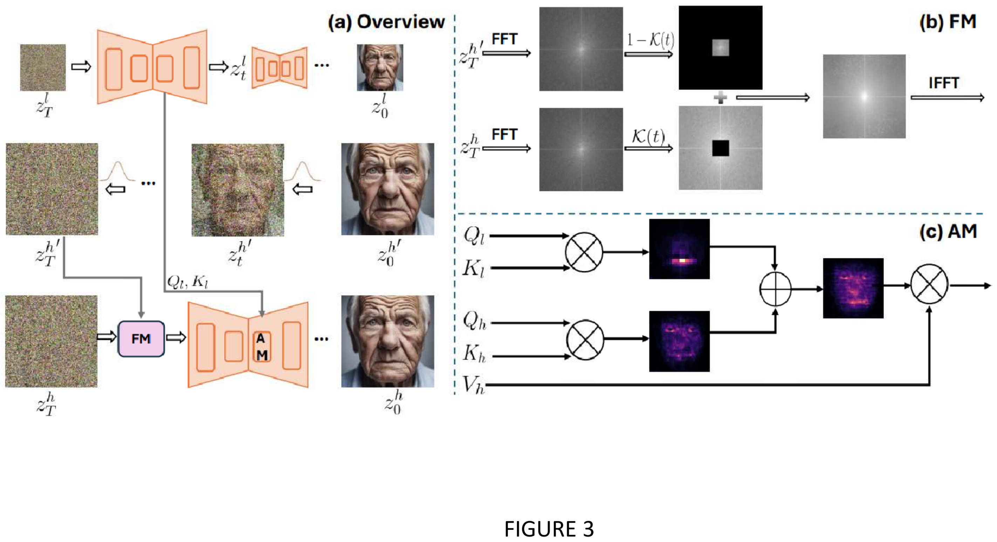

Figure 3 is a schematic diagram showing an overview of the FAM diffusion method of the present techniques. Specifically, Figure 3A shows how the present techniques involve first generating an image at native resolution, followed by a test-time diffuse-denoise process. The present techniques incorporate the Frequency Modulation module and Attention Modulation module during high-resolution denoising to control global structure and fine local texture, respectively. Figure 3B shows details of the Frequency Modulation, where the Fourier domain is used to selectively condition low-frequency components during high-resolution denoising while leaving high-frequency components fully controllable. Figure 3C shows details of the Attention Modulation module, where attention maps from the native image denoising are used to correct the high-resolution denoising. FAM diffusion is described in more detail below.

*Preliminaries*

Latent Diffusion Models (LDM): The present techniques operate in the realm of LDMs, which first convert image $\mathbf{x}_0$ to a latent representation $\mathbf{z}_0$ using an encoder such that $\mathbf{z}_0 = \varepsilon(\mathbf{x}_0)$, $\mathbf{Z}_0 \in \mathbb{R}^{c \times h \times w}$. During training, a Markovian diffusion process progressively adds noise to the input latent $\mathbf{z}_0$ according to a predefined schedule $\beta_t, t \in [1, T]$ by sampling sequentially from:

$$q(\mathbf{z}_t | \mathbf{z}_{t-1}) := \mathcal{N}(\mathbf{z}_t | \sqrt{1 - \beta_t} \mathbf{z}_{t-1}, \beta_t \mathbf{I}) \qquad (1)$$

Conversely, a trainable denoising process progressively recovers the original latent $z_0$ using a noise estimator $Z_\theta = (\mu_\theta, \Sigma_\theta)$ parametrized by $\theta$ by sampling from:

$$p_\theta(\mathbf{z}_{t-1}|\mathbf{z}_t) := \mathcal{N}(z_{t-1}|\mu_\theta(\mathbf{z}_t, t), \Sigma_\theta(\mathbf{z}_t, t)) \qquad (2)$$

During inference, an image is generated by denoising from random noise, $\mathbf{z_T} \sim \mathcal{N}(0, I) \in \mathbb{R}^{c \times h \times w}$, through sequential calls to $\mathcal{Z}_\theta$. The quality of the generated image improves with the number of steps to finally yield the latent representation $\mathbf{z}_0^n \in \mathbb{R}^{c \times h \times w}$, where we introduce the superscript $n$ to indicates generation at native resolution $h \times w$ (i.e. same as training resolution).

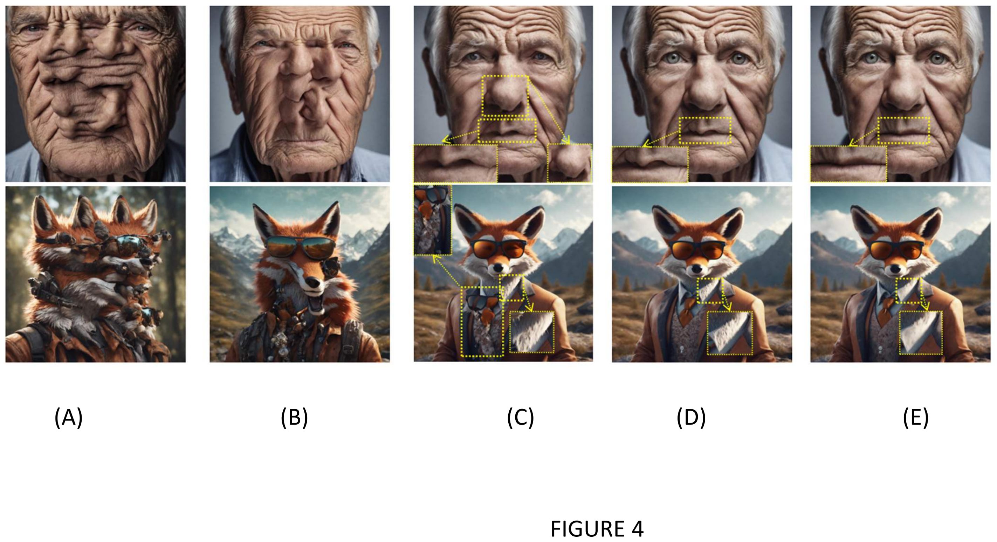

<u>Inference-time diffuse-denoise:</u> The present goal is to use the pretrained parametric denoiser $\mathcal{Z}_\theta$, without further finetuning, to generate $\mathbf{z}_0^m \in \mathbb{R}^{c \times sh \times sw}$ at a higher resolution m, $m = sh \times sw$, where s is the target resolution scaling factor. The naïve approach is to directly start from random noise at the target resolution, $\mathbf{z}_T^m \sim \mathcal{N}(0, I) \in \mathbb{R}^{c \times sh \times sw}$. However, this has been repeatedly shown to lead to suboptimal results, with frequent artifacts and object duplication, as illustrated in Figures 4A to 4C.

Figures 4A to 4E show ablation on the components of FAM diffusion. Specifically, Figure 4A shows Direct Inference (DI) at high resolution from noise, Figure 4B shows Direct Inference from low-res latent (DI*), Figure 4C shows Skip Residual (SR) from DemoFusion, Figure 4D shows the present Frequency Modulation (FM) process, and Figure 4E shows the present Frequency Modulation (FM) process combined with Attention Modulation (AM).

Prior works proposed a test time diffuse-denoise process. The idea is to start from the output of the denoising process at native resolution, $\mathbf{z}_0^n$ rather than noise, which is then upsampled to the target resolution m to obtain $\tilde{\mathbf{z}}_0^m = \mathcal{U}(\mathbf{z}_0^n, s)$, where $\mathcal{U}$ denotes an upsampling function. Next, $T$ forward diffusion steps progressively add noise to the latents $\tilde{\mathbf{z}}_{t=1...T}^m$. Finally, the backward process denoises from $\tilde{\mathbf{z}}_T^m$ to yield the final output $\mathbf{z}_0^m$. Note that $\tilde{\mathbf{z}}$ and $\mathbf{z}$ are used to refer to the latents generated during diffusion and denoising, respectively.

While a standard denoising process as in Eq. 2 could be used, it often leads to inconsistent global structures, as shown in Figure 4B. Instead, the denoising process from Eq. 2 is now defined as:

$$p_\theta(\mathbf{z}_{t-1}^m | f_t(\tilde{\mathbf{z}}_t^m, \mathbf{z}_t^m)) \qquad (3)$$

where $f_t(.)$ is tasked with steering the denoising process and improving the consistency between the high-res and low-res images. Previous work define $ft(.)$ as a simple weighted linear combination of $\tilde{\mathbf{z}}_t^m$ and $\mathbf{z}_t^m$ and coin the mechanism *skip residual.* It is shown in Figure 3C that this yields to suboptimal results. In contrast, the present techniques propose a Frequency Modulated approach to defining $f_t(.)$.

Before explaining FM and AM in more detail, the general principles of the present techniques are explained.

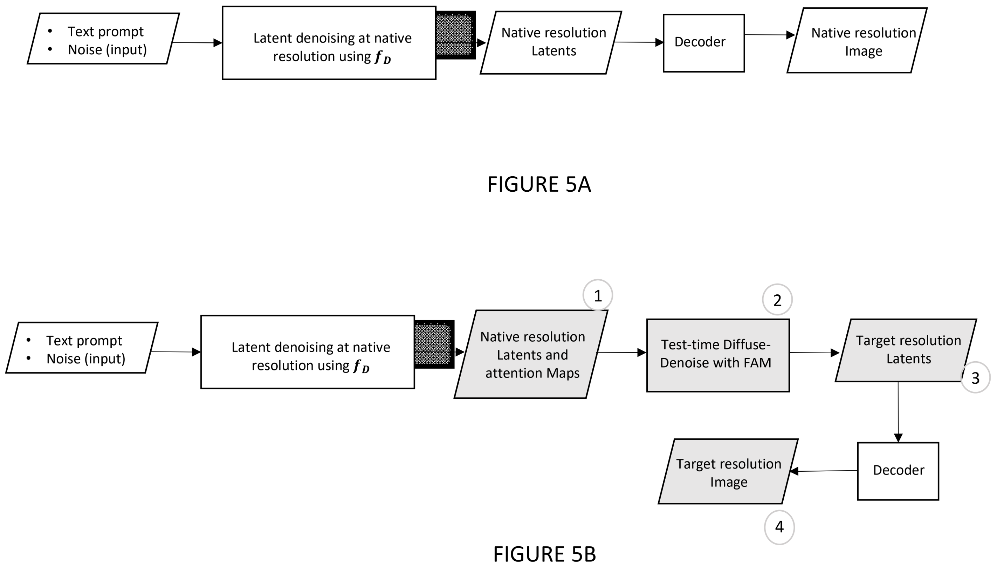

Figure 5A shows a standard text-to-image generation pipeline, which provides some context for understanding the present techniques. As shown, the inputs into a pre-existing diffusion model $f_D$ includes a text prompt for a specific image to be generated (which comes from a user) and a noisy starting image which will be denoised to generate an image, as per the standard diffusion process. The model then denoises the noisy starting image at a native resolution of the model. Rather than operating on the image itself, the model operates on latent representations. The model then generates a final latent representation at the native resolution. This final latent representation is passed into a decoder, which converts the representation into the final generated image at the native representation.

Figure 5B shows a modified text-to-image generation pipeline for the FAM diffusion process of the present techniques. It can be seen that the first two stages are the same as in Figure 5A, and so are not repeated. However, the present techniques may generate the latent representations at the native resolution as well as attention maps (explained below), as shown at step 1. The present techniques then perform a diffuse-denoise process at the higher, target resolution (step 2). The result is the generation of a final latent representation at the required higher target resolution (step 3). This final latent representation is passed into a decoder, which converts the representation into the final generated image at the higher representation.

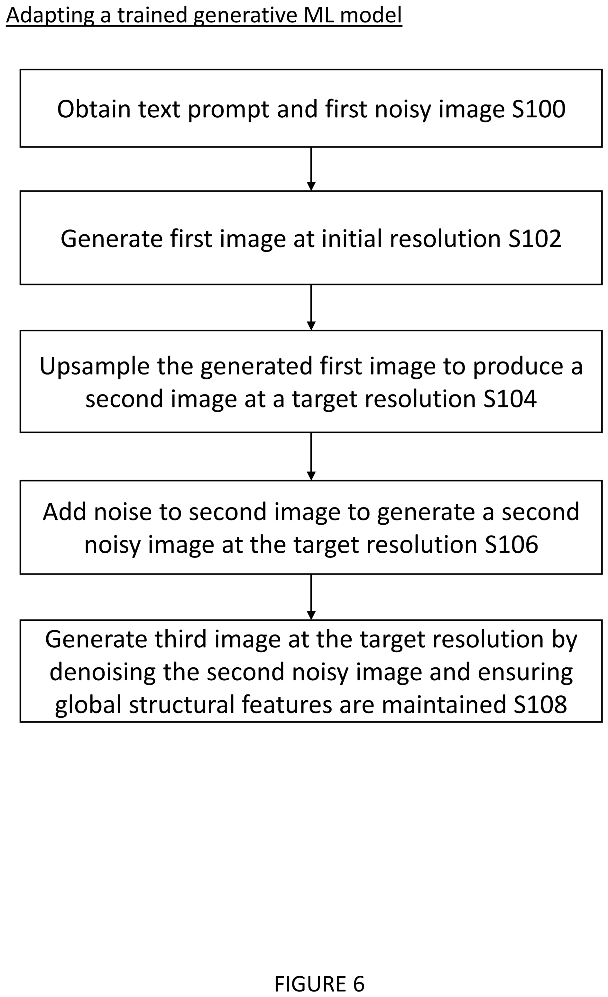

Figure 6 is a flowchart of example steps for generating high-resolution images using a pre-existing trained diffusion-based generative machine learning, ML, model. The method comprises: obtaining a text prompt to generate an image, and a first noisy image (step S100). This is similar to what is described above with respect to Figures 5A and 5B.

The method then comprises: generating a first image according to the text prompt and at an initial resolution, by denoising the first noisy image using the trained generative ML model over a plurality of first denoising timesteps, wherein the trained generative ML model has been trained using images having the initial resolution (step S102). Again, this is described above with respect to Figures 5A and 5B.

The method then comprises: upsampling, using an upsampling module, the generated first image to produce a second image having a target resolution, wherein the target resolution is higher than the initial resolution (step S104). The upsampling causes a higher resolution to be generated, but the resulting second image is not itself be of high enough quality, which is why simply upsampling the image is not sufficient to produce a high quality and high resolution image using a diffusion model. Any upsampling technique may be used, such as bicubic upsampling.

The method comprises: adding noise to the second image using the trained generative ML model over a plurality of noising timesteps, to generate a second noisy image at the second target resolution (step S106). Thus, the present techniques initiate a diffusion process to convert the second image into a second noisy image. This is achieved by: adding noise to a latent representation of the second image generated at a previous noising timestep; and storing the noised latent representation.

The method comprises: generating a third image at the target resolution (step S108) using a second denoising process. This is achieved by: denoising the second noisy image using the trained generative ML model over a plurality of second denoising timesteps, wherein each second denoising timestep corresponds to a noising timestep, and during each second denoising timestep, ensuring global structural features in the second image are maintained, wherein the global structural features are obtained from the stored noised latent representation for the corresponding noising timestep. How the global structural features are maintained is now described in more detail below in relation to the Frequency Modulation.

Frequency-Modulated Denoising: The conditioning of the denoising steps through the skip residual has been shown to improve consistency between low and high-resolution images. However, it is observed that it lacks control over the information transferred. More specifically, the goal of the test-time diffuse-denoise process is to take the upsampled low-resolution image and to produce an output that 1) preserves the global structure, and 2) improves the texture and high-frequency details. The skip residual mechanism however steers the output towards the input indiscriminately, which serves the first objective but can negatively impact the latter. It would be desirable to instead harness the global structure information from the diffused latents of the forward process, while allowing the denoising process to handle the generation of details. To this end, the present techniques appeal to the frequency domain, where global structure and finer details are captured by low- and high-frequency, respectively, and re-define the function $f_t(.)$, which controls information transfer from the forward diffusion into the denoising process.

Let $\mathcal{K}(t)$ be a high-pass filter for timestep $t$, the function $f_t(.)$ in Eq. 3 is defined as follows:

$$f_t(\tilde{\mathbf{z}}_t^m, \mathbf{z}_t^m) = \begin{aligned} & IDFT_{2D}(\mathcal{K}(t) \odot DFT_{2D}(\mathbf{z}_t^m) \\ & + (1 - \mathcal{K}(t)) \odot DFT_{2D}(\tilde{\mathbf{z}}_t^m)), \end{aligned} \quad (4)$$

where $\odot$ denotes the Hadamard product. Essentially, the high-frequency coefficients of the denoised latent $\mathbf{z}_t^m$ are combined with the low-frequency coefficients of the diffused latent $\tilde{\mathbf{z}}_t^m$, modulated by the filter $\mathcal{K}(t)$. Eq. 4 can be further reformulated in the time domain as below:

$$f_t(\tilde{\mathbf{z}}_t^m, \mathbf{z}_t^m) = \mathbf{z}_t^m + \kappa(t) \circledast (\tilde{\mathbf{z}}_t^m - \mathbf{z}_t^m), \quad (5)$$

where $\kappa(t) = IDFT_{2D}(1 - \mathcal{K}(t)) \in \mathbb{R}^{sh \times sw}$ is a convolutional kernel, and $\circledast$ denotes the circular convolution operator. Eq. 5 shows that the frequency modulation adds a low-frequency update to the denoised latent $\mathbf{z}_t^m$ directed towards the diffused latent $\tilde{\mathbf{z}}_t^m$, subsequently preserving the global structural information from the upsampled latent. Furthermore, the circular convolution $\kappa(t)$ in Eq. 5 can be interpreted as an additional (non-learnable) convolutional layer of the UNet, effectively providing it with a global receptive field and helping generate consistent structure without modifying the UNet architecture or using dilated sampling. The result of the present FM approach is shown in Figure 4D. In comparison, the skip residual approach of DemoFusion, shown in Figure 3C, produces inconsistencies like a missing left nostril and unnaturally small eyes.

More specifically, the present techniques rely on the frequency domain and use a high pass filter to steer the denoising process as described in Eq. 4. In the following, the formal definition of the time-varying high pass filter, $\mathcal{K}(t)$, that is used is provided.

The high-pass filters $\mathcal{K}(t)$ have time-varying cut-off frequencies, defined as follows:

$$\rho(t) = \frac{t}{T} \quad \text{(A1)}$$

$$\tau_h(t) = h \cdot c \cdot (1 - \rho(t)) \quad \text{(A2)}$$

$$\tau_w(t) = w \cdot c \cdot (1 - \rho(t)) \quad \text{(A3)}$$

where $\tau_h(t)$ and $\tau_w(t)$ are the horizontal and vertical cut-off frequencies at timestep $t$, respectively. Subsequently, the mask $\mathcal{K}(t)$, which is applied on the shifted frequency spectrum centered on $(x_c, y_c)$, is defined as

$$\mathcal{K}(t) = \begin{cases} \rho(t), & \text{if } |x - x_c| < \frac{\tau_w(t)}{2} \\ & \quad \& |y - y_c| < \frac{\tau_h(t)}{2}, \\ 1, & \text{otherwise} \end{cases} \quad \text{(A4)}$$

The cut-off frequency grows as the denoising process progresses, while the scaling factor of the low-frequency coefficients decreases. The present frequency modulation is designed such that the guidance from the denoised latent $\tilde{z}_t$ becomes more significant as $t \to 0$. In the experiments, $c = 0.5$ is used.

Derivation of the Frequency Modulation in time-domain: As noted above, the frequency modulation introduced in Eq. 4 can be reformulated in time domain as Eq. 5, and the corresponding benefits are also noted. Here, a formal derivation to support the equivalence between the two formulations is provided. For ease of presentation, the timestep t and resolution $m$ notations are omitted from operands.

Let $\mathbf{z} \in \mathbb{R}^{h \times w}$ be the 2D latent, and $\mathbf{Z} = DFT_{2D}(\mathbf{z}) \in \mathbb{C}^{h \times w}$ be the Fourier transform of $\mathbf{z}$. Written in matrix form,

$$\mathbf{Z} = (W_r \mathbf{z} W_c), \quad \text{(A5)}$$

where $W_r \in \mathbb{C}^{h \times h}, W_c \in \mathbb{C}^{w \times w}$ are the row- and column-wise Fourier transform matrices, respectively. Let $\mathcal{K} \in \mathbb{R}^{h \times w}$ be the high-pass filter defined above, such that the proposed mixing operation in the frequency domain is formulated as below:

$$\hat{\mathbf{Z}} = \mathcal{K} \odot DFT_{2D}(\mathbf{z}) + (1 - \mathcal{K}) \odot DFT_{2D}(\tilde{\mathbf{z}})$$

$$= \mathcal{K} \odot (W_r \mathbf{z} W_c) + (1 - \mathcal{K}) \odot (W_r \tilde{\mathbf{z}} W_c)$$

$$= W_r \mathbf{z} W_c + (1 - \mathcal{K}) \odot (W_r (\tilde{\mathbf{z}} - \mathbf{z}) W_c)$$

The inverse DFT of $\hat{\mathbf{Z}}$, which is the outcome of Eq. 4, is formulated as:

$$\hat{\mathbf{z}} = IDFT_{2D}(\hat{\mathbf{Z}})$$

$$= W_r^{-1}\big(W_r \mathbf{z} W_c + (1 - \mathcal{K}) \odot (W_r (\tilde{\mathbf{z}} - \mathbf{z}) W_c)\big) W_c^{-1}$$

$$= W_r^{-1} W_r \mathbf{z} W_c W_c^{-1} + W_r^{-1}\big((1 - \mathcal{K}) \odot (W_r (\tilde{\mathbf{z}} - \mathbf{z}) W_c)\big) W_c^{-1}$$

$$= \mathbf{z} + (W_r^{-1}(1 - \mathcal{K}) W_c^{-1}) \circledast (W_r^{-1} W_r (\tilde{\mathbf{z}} - \mathbf{z}) W_c W_c^{-1})$$

$$= \mathbf{z} + k \circledast (\tilde{\mathbf{z}} - \mathbf{z}),$$

resulting in Eq. 5 above, where $k = W_r^{-1}(1 - K) W_c^{-1} = IDFT_{2D}(1 - \mathcal{K})$ is a convolutional kernel and $\circledast$ denotes a circular convolution operator.

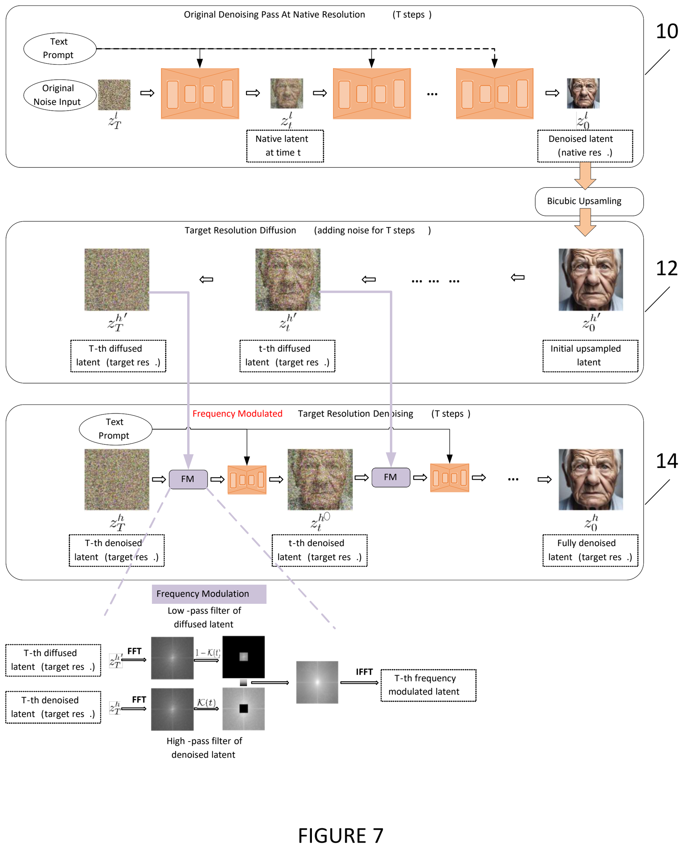

Figure 7 is a schematic diagram illustrating the Frequency Modulation process. In block 10 of Figure 7, the ordinary denoising process at the native resolution is performed, as described above with reference to, for example, Figure 5A and 6. At the end of block 10, the first image has been generated over T first denoising timesteps, at the native resolution of the model. This is then upsampled, as explained with reference to Figure 6 above, to generate a second image at the higher resolution.

Block 12 of Figure 7 shows the diffusion or noising process during which noise is added to the second image to generate a noisy second image. The diffusion process takes place over T noising timesteps. The result is the generation of a second noisy image, which differs from the first noisy image by being at the higher target resolution.

Block 14 of Figure 7 shows the second denoising process, at the higher target resolution. The second denoising process occurs over T second denoising timesteps, and results in a third image which is fully denoised and at the higher target resolution. During this second denoising process, the present Frequency Modulation module is used to control global structure. The FM module ensures global structure consistency is maintained (fixed) between the third image and the first image, while allowing higher fidelity details to be generated appropriately. In other words, the first image is generated at a native resolution and the third image is generated at a higher resolution, which may be twice as big, but the model needs to know how to fill all the additional pixels of the third image. The FM module ensures that the structure of the first image is present in the third image (e.g. the man has only two eyes, one nose, one mouth, etc. in both the first image and the third image) but allows the model to decide how to fill in any blank pixels within this structure.

Thus, step S108 in Figure 6, to generate the third image may comprise, at each second denoising timestep of the plurality of second denoising timesteps, the following further steps: generating, using a frequency modulation module, a frequency-modulated version of the second noisy image, wherein the frequency modulation module ensures global structural features are maintained; and inputting the frequency-modulated version of the second noisy image into the trained generative ML model for denoising. This can be seen in Figure 7 block 14: at each time step, the latent representation is input into the FM module prior to being input into the model. The frequency modulation, FM, module is any module, function or routine which is able to produce a frequency-modulated version of the second noisy image. In this way, the FM module controls what is input into the trained generative ML model during the second denoising steps, and therefore, helps to ensure that global structural features are maintained during the second denoising.

Specifically, at each second denoising timestep, the step (S108) of generating a frequency-modulated version of the second noisy image may comprise: inputting the stored noised latent representation of the corresponding noising timestep and the denoised latent representation of the second denoising timestep into the frequency modulation, FM, module. To enable the FM module to maintain global structural features, it needs to know what these features are. Therefore, prior to each second denoising timestep, the FM module is given the stored noised latent representation from the corresponding noising timestep because this includes the global structural features from the upsampled second image. (This can be seen in block 14 of Figure 7, since the FM receives two inputs at each timestep - one from block 14 and one from block 12.) This is because the second image is generated by simply upsampling the first image, and so maintains the structural information (local and global). The FM module is also given the denoised latent representation, so that the FM module can effectively affect how the trained ML model denoises the denoised latent representation to ensure the global structural information is maintained during the denoising. It is important that the two inputs into the FM module correspond to the same timesteps to ensure that the denoising occurs smoothly. That is, the T-th noised latent representation is input together with the T-th denoised latent representation.

As noted above, the way the FM module works is by operating in the frequency domain. This is now explained in more detail.

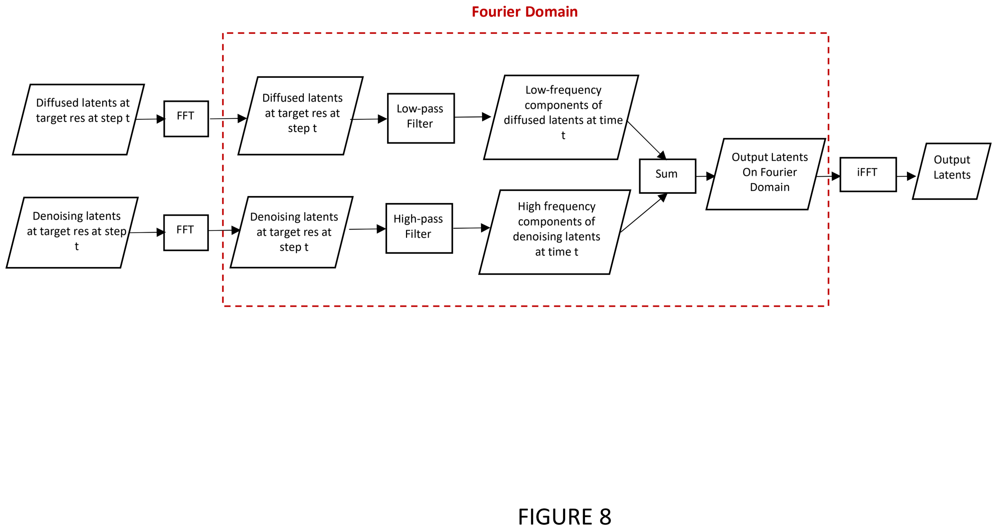

Figure 8 is a block diagram showing example steps for generating a frequency-modulated version of a latent representation during each second denoising timestep.

As shown in the top half of Figure 8, at each second denoising timestep, generating a frequency-modulated version of the latent representation may comprise: applying a low-pass filter to the stored noised latent representation of the corresponding noising timestep, to retain low-frequency components of the stored noisy latent representation, wherein the low-frequency components correspond to global structural features in the second image. The low-pass filter is part of the FM module and is applied to the stored noisy latent representation (obtained from the second image). The low-pass filter is used to identify the low-frequency components (effectively of the second image), so that these components can be maintained during the current second denoising timestep by the trained ML model.

As shown in the bottom half of Figure 8, at each second denoising timestep, generating a frequency-modulated version of the latent representation may comprise: applying a high-pass filter to the denoised latent representation of the second denoising timestep, to retain high-frequency components of the denoised latent representation, wherein the high-frequency components correspond to local structural features in the second image. The high-pass filter is part of the FM module and is applied to the denoised latent representation that is to be processed by the trained ML model during the current second denoising timestep. The high-pass filter is used to identify the high-frequency components (effectively from the previous denoising step), so that these components can be maintained during the current second denoising timestep by the trained ML model. In other words, it is desirable to maintain the high-frequency components generated during the previous denoising step in the current denoising step, because these have been generated by the trained ML model during the denoising and are likely important local structural features. Thus, these high-frequency components from the denoising are maintained as well as the low-frequency components from the noising process.

The high-pass filter may be used to retain local structural features such as, for example: colour information; texture information; pattern information. It will be understood that these are non-limiting examples of local structural features. As explained above, broadly speaking, local structural features are high frequency features which change across an image and are likely to disappear if the image were downsized or made blurry. For example, the colour green of a football field in an image may remain in an image if it were downsized, but the texture of the field (e.g. the blades of grass) may be lost.

As shown by the "sum" box in Figure 8, at each second denoising timestep, generating a frequency-modulated version of the latent representation may comprise: combining the retained low-frequency components of the stored noised latent representation and the retained high-frequency components of the denoised latent representation, to generate the frequency-modulated version of the latent representation of the second noisy image. Thus, to ensure that the high-frequency components generated during the previous denoising step and the low-frequency components from the noising process are maintained, the retained components may be combined, such as by summing.

Prior to generating a frequency-modulated version of the second noisy image, the method may comprise: converting, using a Fast Fourier Transform, FFT, the stored noised latent representation of the corresponding noising timestep and the denoised latent representation of the second denoising timestep into a Fourier domain. This is shown by the "FFT" blocks performed prior to operating in the Fourier domain (dashed region in Figure 8). An FFT is an algorithm for converting a signal from its original domain (e.g. image / pixel space) to a representation in the frequency domain. This helps to perform the frequency modulation steps, as the high and low frequency components (i.e. local and global structural information) are more easily discernible in the frequency domain than in the original domain.

Consequently, prior to inputting the frequency-modulated version of the second noisy image into the trained generative ML model for denoising, the method may comprise: applying an inverse Fast Fourier Transform to the generated frequency-modulated version of the latent representation of the second noisy image. This is shown by the "iFFT" block that follows the processing in the Fourier domain. Thus, the reverse of the FFT process may be performed to convert the summed components back into a form that the trained ML model is able to understand. The resulting frequency-modulated version of the second noisy image (i.e. latent representation) is then suitable for input into the diffusion model to generate the next latent representation via denoising, for the next timestep.

As mentioned above, the FM module ensures that global structural features are maintained between the noising and second denoising processes (e.g. number of footballs). The FM module also ensures that local structural features are maintained between timesteps of the second denoising process (e.g. colour, shape and texture of the football). However, the trained ML model may not understand how those local structural features fit in with the global structural features (e.g. whether the colour of the football only applies to the football or also to the boy). Thus, to ensure that the local structural features and global structural features are correctly merged in the generated third image, it is necessary to control where the trained ML model adds the local structural features in the third image. To do this, the present techniques utilise an attention modulation, AM, module. The attention modulation, AM, module is any module, function or routine which is able to cause the trained ML model to pay attention to where the local structural features should appear in the third image.

Attention Modulation: While the FM module successfully maintains global structure and solves the issue of object duplication as shown in Figure 4D, it is noted that local structures can be inconsistently generated due to the discrepancy between training-time native resolution and the target inference-time high resolutions. For example, the top image in Figure 3D shows a distorted mouth compared to the one at native resolution. Similarly, in the bottom example, fur texture is incorrectly generated on the shirt collar. That is, the high-frequency detail generated on the shirt collar is semantically related to one generated on the fox's face and not to the other parts of the shirt. It is hypothesized that this stems from incorrect attention maps during the high-res denoising stage. This motivates the proposal for including Attention Modulation (AM) in the present techniques. Inspiration is taken from attention swapping, a recent method to combine information from two diffusion processes in a more localized manner, and the idea is extended to transfer local structural information from the denoising process at native resolution to the one at target resolution.

In particular, the attention of an input tensor **z** is computed by first projecting it linearly into a triplet of query, keys, and values, ($Q, K, V$), respectively, and the self-attention is computed as:

$$Att(z) = softmax\left(\frac{Q \cdot K^T}{\sqrt{d}}\right)V = M \cdot V \ (6)$$

where $d$ indicates the feature dimensionality, and M is referred to as the attention matrix.

In the present techniques, the self-attention is modified at specific layers of the UNet of the high-resolution denoising process to incorporate information from the attention maps of the native resolution as:

$$\overline{M}^m = (\lambda \cdot \mathcal{U}(M^n, s) + (1 - \lambda) \cdot M^m) \qquad (7)$$

where $M^n$ and $M^m$ are the attention matrices at native and target resolution respectively, $\lambda$ is a hyperparameter, and $\mathcal{U}$ is an s-times upsampling function. The new attention matrix $\overline{M}^m$ is then used instead of $M^m$ during the high-res denoising process in Eq. 6.

Applying the present AM module at all layers of the UNet can lead to suboptimal performance due to over-regularization. Instead it is applied only for layers in up-blocks of the UNet, as they are known to preserve layout information better. Furthermore, experiments with AM at various stages were conducted and it was found that the highest benefit is at *up_block_0.* Results shown in Figure 4E demonstrate the benefit of the proposed AM module, particularly regarding better preservation of local structures such as the mouth and shirt collar, highlighted in the yellow boxes.

More specifically, Attention Modulation can be in practice implemented as:

$$z' = (\lambda \cdot \mathcal{U}(M^n, s) + (1 - \lambda) \cdot M^m) \cdot V_m$$
$$= \lambda \cdot \mathcal{U}(M^n \cdot \mathcal{D}(V_m, s), s) + (1 - \lambda) \cdot M^m \cdot V$$
$$= \lambda \cdot \mathcal{U}(\text{Att}(Q_n, K_n, \mathcal{D}(V_m, s)), s) + (1 - \lambda) \cdot \text{Att}(Q_m, K_m, V_m)$$

$$z' = (\lambda \cdot \mathcal{U}(M^n, s) + (1 - \lambda) \cdot M^m) \cdot V_m$$
$$= \lambda \cdot \text{Att}(\mathcal{U}(Q_n, s), \mathcal{U}(K_n, s), V_m) + (1 - \lambda) \cdot \text{Att}(Q_m, K_m, V_m)$$

where $\mathcal{U}$ denotes an s-times upsampling function. Both attention operations can utilize Flash Attention. It is noted that Flash Attention is available as a Triton kernel, hence a custom kernel supporting AM could be implemented by scaling the raw block-wise scores directly.

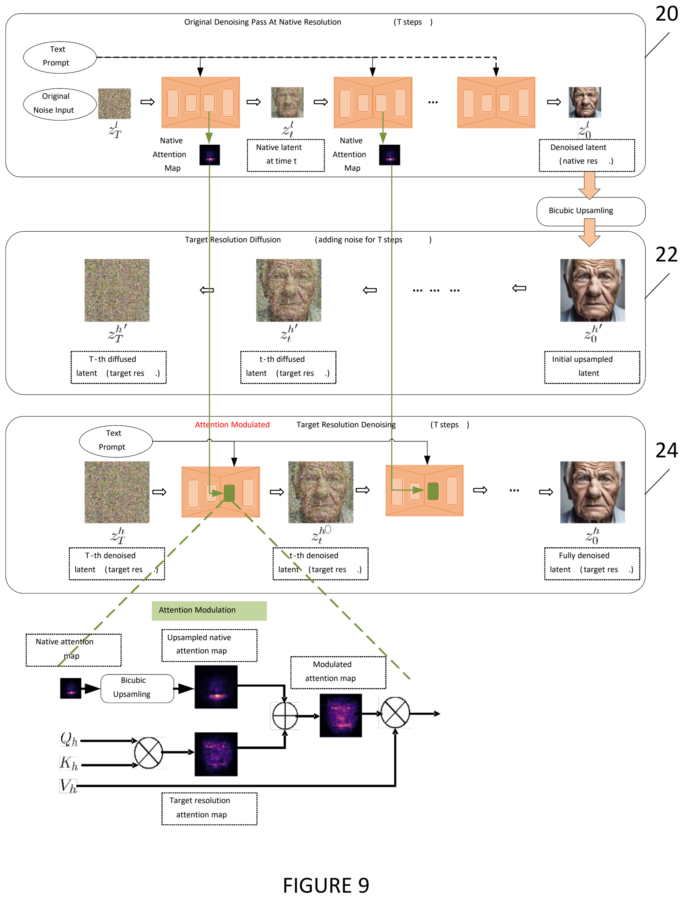

Figure 9 is a schematic diagram illustrating the Attention Modulation process. In block 20 of Figure 9, the ordinary first denoising process at the native resolution is performed. However, as mentioned with reference to Figure 5B, when Attention Modulation is utilised, attention maps are also generated during this first denoising process. As shown in block 20, at each first denoising timestep T, not only is a new latent representation generated by the model, but also an attention map is produced. Thus, the step (S102 in Figure 6) of generating the first image by denoising the first noisy image may comprise: generating, at each first denoising timestep, an attention map at the initial resolution, wherein each attention map guides the trained generative ML model to focus on particular parts of the first noisy image; and storing the generated attention maps.

As shown at the bottom of Figure 9, prior to storing (or prior to input into the AM process), the present method may further comprise: upsampling, using the upsampling module, the generated attention maps at the initial resolution to produce upsampled attention maps having the target resolution. This may ensure that the upsampled attention maps are useable by the attention modulation module, because they are of the right size/dimension.

Block 22 of Figure 9 is the same as block 12 of Figure 7. No additional processing occurs during this first noising process in relation to Attention Modulation.

Block 24 of Figure 9 shows how the Attention Modulation process is introduced during the second denoising process to ensure that fine local structure/texture is semantically correct. As shown in block 24, the AM process uses the attention maps generated during the first denoising process to correct the second denoising process. At each second denoising timestep of the plurality of denoising timesteps, the process of generating the third image may comprise: generating an attention map at the target resolution; and incorporating, using an attention modulation module, information from the stored upsampled attention map from a corresponding first denoising timestep into the generated attention map at the target resolution, to thereby transfer local structural features from the first image to the third image. That is, a new attention map is generated by the attention modulation module, by performing attention on the second denoising latent representation prior to further processing by the trained ML model. Attention is a standard process in diffusion models, and therefore, the attention process is effectively modified so that information from the native resolution attention map is included when the attention at the high resolution is being performed by the ML model. Then, information from an upsampled attention map generated for a corresponding first denoising timestep is incorporated into the new generated attention map, so that the new attention map includes the attention information from the original denoising process that was used to generate the first image. There are multiple points within the denoising performed by the ML model where attention is performed. This means that the attention performed by layer L for the native resolution feeds into the attention performed by layer L for the high resolution, and so on.

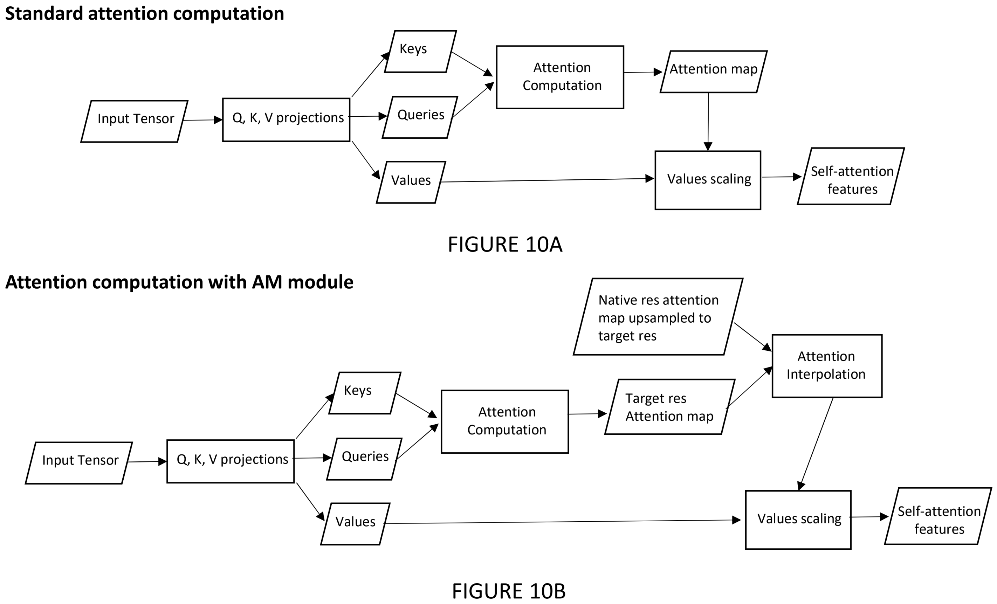

Figure 10A shows a standard attention pipeline, which provides some context for understanding the present techniques. As shown, an input tensor (e.g. a latent representation) is used to generate query, key and values. The keys and queries are used to generate an attention map, which is then used with the values to generate self-attention features.

Figure 10B shows a modified attention pipeline for the FAM diffusion process of the present techniques. As shown, the process begins in the same way as the standard pipeline, but here, the attention maps from the first denoising process at the initial/native resolution are used to condition or modify the attention maps generated during the second denoising process at the target resolution, to ensure that details appear in the third image in the right places/right contexts (i.e. are semantically correct).

Experiments

*Experimental setup*

To demonstrate the effectiveness of the present approach, the present approach is paired with a well-performing diffusion model like SDXL. For completeness, it is also paired with the recent HiDiffusion, which specifically changes the attention mechanism of SDXL with windowed attention to improve the model latency. SDXL is trained at 1024×1024 resolution, which is referred to herein as 1 ×. Experiments are performed with three unseen higher resolutions such that the model generates 2 × 2, 3 × 3, and 4 × 4 times more pixels than the training setup. Additional experiments are performed with various aspect ratios, e.g. 2 × 4.

*Evaluation set*

Following previous work, performance is evaluated on a subset of the Laion-5B dataset. Given the number of compared methods and significant computational demands associated with the task, 10K images are randomly sampled from Laion-5b, which are used as the real images set, and 1K captions are sampled, which are used as text prompts for the models.

*Evaluation metrics*

Following prior work, the quality and diversity of the generated images are evaluated using Frechet Inception Distance (FID) and Kernel Inception Distance (KID), computed between the generated and real images. Since FID requires resizing images to 299 × 299, which negatively impacts the assessment, it is typical to adopt their patch-level variants. Specifically, 10 random crops are extracted from each image before calculating FID and KID, referring to these metrics as $FID_c$ and $KID_c$. To further evaluate the semantic similarity between image features and text prompts, the CLIP score is reported. To measure the efficiency of each method, latencies on a single A40 GPU are computed.

*Main Results*

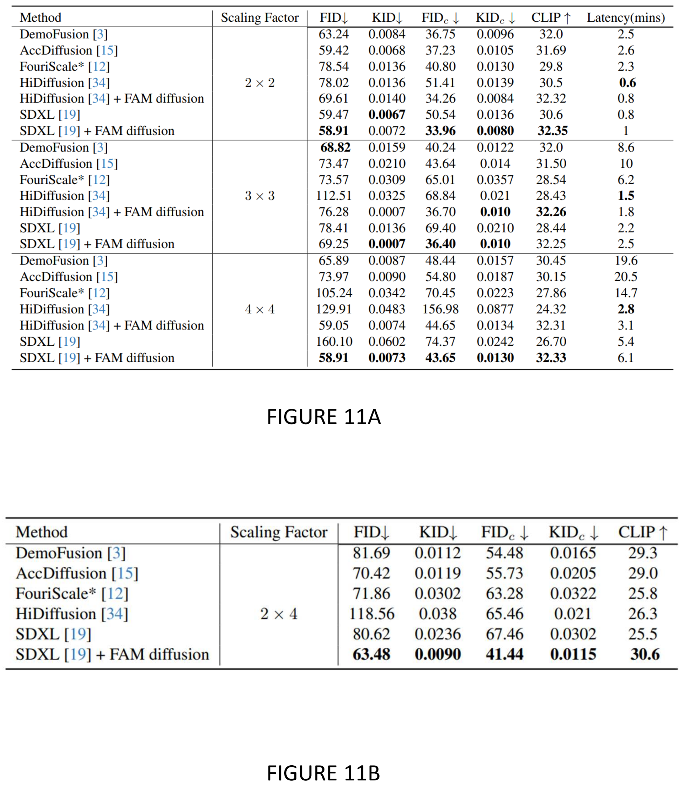

Demofusion, AccDiffusion, FouriScale, and HiDiffusion are selected as representative methods of the current state-of-the-art among high-resolution generation methods. Figure 11A is a table showing results of system-level comparisons with SDXL, where * indicates inference with FreeU. As shown in Figure 11A, the present techniques (FAM diffusion) achieves the best overall performance on $FID_c$, $KID_c$, and CLIP Score in all cases. In the case of FID and KID, FAM diffusion provides substantial gains for larger scale factors, while producing similar results to DemoFusion on lower scale factors. However, these metrics heavily downsample high-resolution images before computing the metrics and thus do not capture finer details in the evaluation results. This is a widely-known issue for these metrics, as explained above. Finally, it is noted that FAM diffusion adds only small latency overheads compared to direct inference on the target resolution, e.g. 0.2, 0.3, and 0.7 min at 2 ×, 3 × and 4 × scale factors respectively when combined with SDXL. In comparison, DemoFusion adds 14.2 sec latency vs SDXL direct inference at 4 × scale factor. When compared to the frequency-based method FouriScale, FAM diffusion also shows notable improvements in both quality and latency. For instance, under 4K resolution image generation, it achieves **43.65** vs. **70.45** on $FID_c$ and **32.31** vs. **26.67** on CLIP score, while also being faster than FouriScale. Additionally, it is observed that FAM diffusion can be seamlessly integrated into single-pass methods, such as HiDiffusion, to enhance performance while maintaining fast image generation, achieving an effective latency-quality trade-off. These results quantitatively validate the effectiveness of the present method in improving the quality of image generation.

Figure 11B is a table showing results of system-level comparisons with SDXL, where * indicates inference with FreeU. Here, the effect of using FAM diffusion to target different aspect ratios is studied. In particular, starting from the SDXL model, the present techniques are used to targeting higher resolutions with different aspect ratios. The quantitative results in Figure 11B clearly highlight the versatility of the present method that can seamlessly adapt to various settings without compromising quality.

*Ablation Study*

In this section, ablation studies are conducted, using SDXL with the $2 \times 2$ scale factor setting.

Effectiveness of the components in the FAM diffusion: The effect of the two components of FAM diffusion, Frequency-Modulated Denoising (FM) and Attention Modulation (AM), are studied. The results shown in Figure 4 indicate the following: (1) both direct inference from random noise, and direct inference from the diffused latent at native resolution generate outputs with structural distortions and repeated patterns; (2) while the Skip Residuals of DemoFusion helps maintain the global structure of the image, it still produces artifacts and poor local patterns; (3) compared to Skip Residuals, FM reduces undesirable local patterns by leveraging the low-frequency information of the image at native resolution, which provides better structural guidance; (4) Attention Modulation resolves inconsistencies between local patterns and global structure by utilizing the attention map from the native resolution, offering strong guidance of the semantic relationships among latent tokens. Overall, FM and AM address structural distortions and local pattern inconsistencies in high-resolution images effectively, highlighting the meaningful contributions of FAM diffusion.

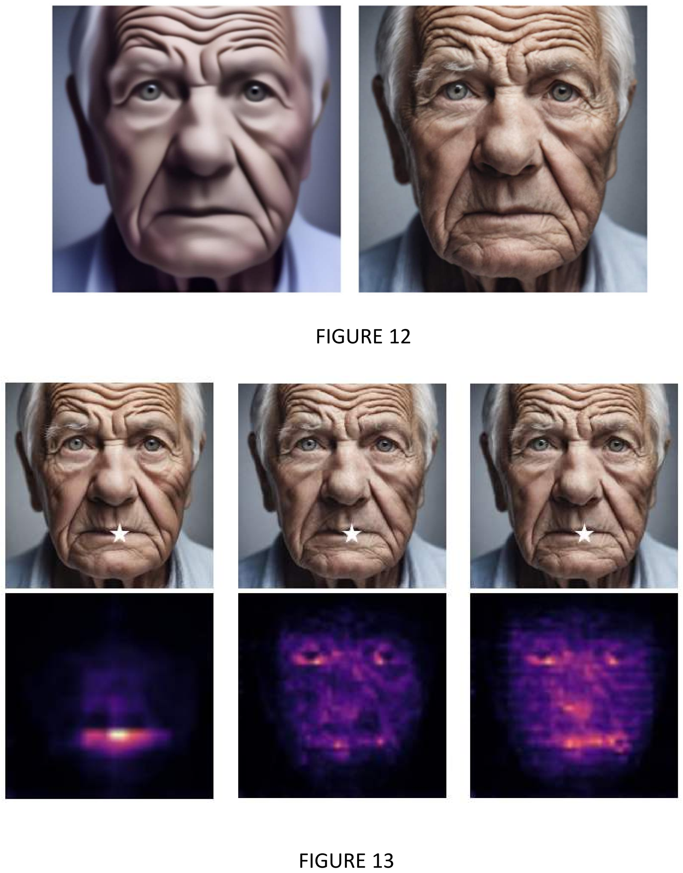

Effectiveness of the time-aware formulation on the FM module: The effect of the time-varying formulation of FM is shown, as illustrated in Figure 12. Figure 12 shows a comparison between images generated using constant low-frequency information (left) and time-aware low-frequency information (right). Specifically, the FM module incorporates low-frequency information from the corresponding diffused latent at each step t. Instead, this time-varying nature can be avoided by utilising the upsampled latent as a single static reference. However, this approach results in images that appear noticeably blurrier (left image) and lose finer details associated with high-frequency information, highlighting the importance of the dynamic nature of the FM module throughout the denoising process.

Analysis of Attention Modulation: To better understand the principles underlying the AM module, Figure 13 visualised the self-attention maps of a tokens from the mouth region (marked with a star) as the query and all tokens as the key and value. The left images are based on low resolution attention, the middle images are based on high resolution attention, and the right images based on the present attention modulation. The resulting attention map computed using the low-resolution latent (left) primarily encodes coarse information of the semantic relations among parts of the image, but lacks fine-grained contextual information across the entire face. Instead, the attention maps at high resolution (middle) are more detailed, but fail to capture semantic relatedness, e.g. the mouth areas are not highlighted. After applying AM, the attention map (right) effectively integrates local-global relationships with enhanced fine-grained detail. This analysis provides visual insights into how AM repairs inconsistencies in local patterns, contributing to more coherent global structures.

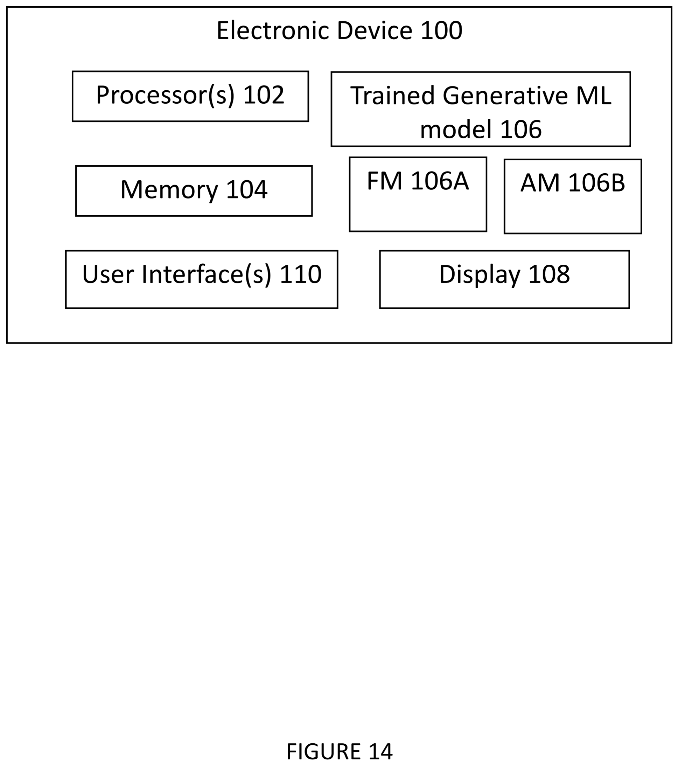

Figure 14 is a block diagram of an electronic device 100 for adapting a trained generative machine learning, ML, model 106 to generate high-resolution images, the electronic device comprising: at least one processor 102 coupled to memory 104, for performing the methods described herein.

The device 100 may comprise at least one user interface 110 to, for example, receive text prompts from a user.

The user device may comprise a display 108 for display the generated images.

The user device comprises an FM module 106A and may comprise an AM module 106B for implementing the present techniques during inference time.

The electronic device 100 may comprise at least one processor 102 coupled to memory 104 and arranged for implementing the methods described herein. The memory 104 may store instructions that, when executed by the at least one processor 102 individually or collectively, cause the at least one processor to perform the methods described herein.

References:

- DemoFusion - Ruoyi Du, Dongliang Chang, Timothy Hospedales, Yi-Zhe Song, and Zhanyu Ma. DemoFusion: Democratising highresolution image generation with no $$$. In IEEE Conference on Computer Vision and Pattern Recognition, 2024
- HiDiffusion - Shen Zhang, Zhaowei Chen, Zhenyu Zhao, Yuhao Chen, Yao Tang, and Jiajun Liang. HiDiffusion: Unlocking higherresolution creativity and efficiency in pretrained diffusion models. In European Conference on Computer Vision, 2024
- Stable Diffusion (SD) - Robin Rombach, Andreas Blattmann, Dominik Lorenz, Patrick Esser, and Bjorn Ommer. High-resolution image synthesis with latent diffusion models. In IEEE Conference on Computer Vision and Pattern Recognition, 2022.
- SDXL - Dustin Podell, Zion English, Kyle Lacey, Andreas Blattmann, Tim Dockhorn, Jonas Muller, Joe Penna, and Robin Rombach. SDXL: Improving latent diffusion models for high-resolution image synthesis. In International Conference on Learning Representations, 2024
- AccDiffusion - Zhihang Lin, Mingbao Lin, Zhao Meng, and Rongrong Ji. AccDiffusion: An accurate method for higher-resolution image generation. In European Conference on Computer Vision, 2024
- FouriScale - Linjiang Huang, Rongyao Fang, Aiping Zhang, Guanglu Song, Si Liu, Yu Liu, and Hongsheng Li. FouriScale: A frequency perspective on training-free high-resolution image synthesis. In European Conference on Computer Vision, 2024.

- Laion-5B dataset - Christoph Schuhmann, Romain Beaumont, Richard Vencu, Cade W Gordon, Ross Wightman, Mehdi Cherti, Theo Coombes, Aarush Katta, Clayton Mullis, Mitchell Wortsman, Patrick Schramowski, Srivatsa R Kundurthy, Katherine Crowson, Ludwig Schmidt, Robert Kaczmarczyk, and Jenia Jitsev. LAION-5B: An open large-scale dataset for training next generation image-text models. In Neural Information Processing Systems - Datasets and Benchmarks Track, 2022.
- Frechet Inception Distance (FID) - Martin Heusel, Hubert Ramsauer, Thomas Unterthiner, Bernhard Nessler, and Sepp Hochreiter. GANs trained by a two time-scale update rule converge to a local Nash equilibrium. Neural Information Processing System
- Kernel Inception Distance (KID) - Mikołaj Binkowski, Danica J Sutherland, Michael Arbel, and ' Arthur Gretton. Demystifying MMD GANs. International Conference on Learning Representations, 2018.
- CLIP score - Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International conference on machine learning, pages 8748-8763. PMLR, 2021
- FreeU - Chenyang Si, Ziqi Huang, Yuming Jiang, and Ziwei Liu. FreeU: Free lunch in diffusion U-Net. In IEEE Conference on Computer Vision and Pattern Recognition, 2024.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1. A computer-implemented method for generating, on an electronic device, high-resolution images using a trained diffusion-based generative machine learning, ML, model, the method comprising:

   obtaining a text prompt to generate an image, and a first noisy image;
   generating a first image according to the text prompt and at an initial resolution, by denoising the first noisy image using the trained generative ML model over a plurality of first denoising timesteps, wherein the trained generative ML model has been trained using images having the initial resolution;
   upsampling, using an upsampling module, the generated first image to produce a second image having a target resolution, wherein the target resolution is higher than the initial resolution;
   adding noise to the second image using the trained generative ML model over a plurality of noising timesteps, to generate a second noisy image at the second target resolution, by:

   adding noise to a latent representation of the second image generated at a previous noising timestep; and
   storing the noised latent representation; and

   generating a third image at the target resolution, by:

   denoising the second noisy image using the trained generative ML model over a plurality of second denoising timesteps, wherein each second denoising timestep corresponds to a noising timestep, and
   during each second denoising timestep, ensuring global structural features in the second image are maintained, wherein the global structural features are obtained from the stored noised latent representation for the corresponding noising timestep.

2. The method as claimed in claim 1 further comprising:
   displaying the generated third image on a display of the electronic device.

3. The method as claimed in claim 1 or 2 wherein generating the third image comprises, at each second denoising timestep of the plurality of second denoising timesteps:

   generating, using a frequency modulation module, a frequency-modulated version of the second noisy image, wherein the frequency modulation module ensures global structural features are maintained; and

inputting the frequency-modulated version of the second noisy image into the trained generative ML model for denoising.

4.  The method as claimed in claim 3 wherein, at each second denoising timestep, generating a frequency-modulated version of the second noisy image comprises:
    inputting the stored noised latent representation of the corresponding noising timestep and the denoised latent representation of the second denoising timestep into the frequency modulation module.

5.  The method as claimed in claim 3 or 4 wherein, at each second denoising timestep, generating a frequency-modulated version of the latent representation comprises:
    applying a low-pass filter to the stored noised latent representation of the corresponding noising timestep, to retain low-frequency components of the stored noisy latent representation, wherein the low-frequency components correspond to global structural features in the second image.

6.  The method as claimed in claim 5 wherein, at each second denoising timestep, generating a frequency-modulated version of the latent representation comprises:
    applying a high-pass filter to the denoised latent representation of the second denoising timestep, to retain high-frequency components of the denoised latent representation, wherein the high-frequency components correspond to local structural features in the second image.

7.  The method as claimed in claim 6 wherein, at each second denoising timestep, generating a frequency-modulated version of the latent representation comprises:
    combining the retained low-frequency components of the stored noised latent representation and the retained high-frequency components of the denoised latent representation, to generate the frequency-modulated version of the latent representation of the second noisy image.

8.  The method as claimed in any of claims 4 to 7 wherein prior to generating a frequency-modulated version of the second noisy image, the method comprises:
    converting, using a Fast Fourier Transform, the stored noised latent representation of the corresponding noising timestep and the denoised latent representation of the second denoising timestep into a Fourier domain.

9.  The method as claimed in claim 8 wherein prior to inputting the frequency-modulated version of the second noisy image into the trained generative ML model for denoising, the method comprises:
    applying an inverse Fast Fourier Transform to the generated frequency-modulated version of the latent representation of the second noisy image.

10. The method as claimed in any preceding claim wherein generating the first image by denoising the first noisy image comprises:

    generating, at each first denoising timestep, an attention map at the initial resolution, wherein each attention map guides the trained generative ML model to focus on particular parts of the first noisy image; and
    storing the generated attention maps.

11. The method as claimed in claim 10, wherein generating the third image, at each second denoising timestep of the plurality of denoising timesteps comprises:

    generating an attention map at the target resolution; and
    incorporating, using an attention modulation module, information from the stored upsampled attention map from a corresponding first denoising timestep into the generated attention map at the target resolution, to thereby transfer local structural features from the first image to the third image.

12. The method as claimed in claim 11 wherein the trained generative ML model comprises a plurality of layers, and the method further comprises:
    incorporating information from the stored upsampled attention map into the generated attention map during processing by a subset of the plurality of layers of the trained generative ML model.

13. The method as claimed in any one of claims 1 to 12 wherein:

obtaining a text prompt to generate an image comprises obtaining a text prompt to generate a single image; and
generating a third image at the target resolution comprises generating a single image.

14. The method as claimed in any one of claims 1 to 12 wherein:

obtaining a text prompt to generate an image comprises obtaining a text prompt to generate a video comprises a plurality of frames; and
generating a third image at the target resolution comprises generating a plurality of frames.

15. An electronic device for generating high-resolution images using a trained diffusion-based generative machine learning, ML, model, the electronic device comprising:
at least one processor coupled to memory, for:

obtaining a text prompt to generate an image, and a first noisy image;
generating a first image according to the text prompt and at an initial resolution, by denoising the first noisy image using the trained generative ML model over a plurality of first denoising timesteps, wherein the trained generative ML model has been trained using images having the initial resolution;
upsampling, using an upsampling module, the generated first image to produce a second image having a target resolution, wherein the target resolution is higher than the initial resolution;
adding noise to the second image using the trained generative ML model over a plurality of noising timesteps, to generate a second noisy image at the second target resolution, by:

adding noise to a latent representation of the second image generated at a previous noising timestep; and
storing the noised latent representation in storage on the electronic device; and
generating a third image at the target resolution, by:

denoising the second noisy image using the trained generative ML model over a plurality of second denoising timesteps, wherein each second denoising timestep corresponds to a noising timestep, and during each second denoising timestep, ensuring global structural features in the second image are maintained, wherein the global structural features are obtained from the stored noised latent representation for the corresponding noising timestep.

FIGURE 1A

FIGURE 1B

FIGURE 1C

FIGURE 1D

**Existing**

**New**

Generation Model

+

Inference pipeline

Model/Service
Preparation stage

Generation Model

+

**Augmented
Inference pipeline**

FIGURE 2A

**Input**

User query

Target resolution

**Inference**

Generation Model
+ Augmented
Inference Pipeline

**Output**

Generated image
at target
resolution

FIGURE 2B

FIGURE 3

(A)  (B)  (C)  (D)  (E)

FIGURE 4

```
┌─────────────┐      ┌──────────────────────┐ ┌──┐   ┌──────────────┐      ┌──────────┐      ┌──────────────┐
│ • Text prompt│ ──→  │ Latent denoising at   │▓▓│   │ Native resolution│ ──→ │ Decoder  │ ──→ │ Native resolution│
│ • Noise (input)│    │ native resolution     │▓▓│   │ Latents       │      │          │      │ Image         │
│             │      │ using fD              │  │   │               │      └──────────┘      │               │
└─────────────┘      └──────────────────────┘ └──┘   └──────────────┘                        └──────────────┘
```

## FIGURE 5A

```
┌─────────────┐      ┌──────────────────────┐ ┌──┐   ┌──────────────┐①    ┌──────────────┐②   ┌──────────────┐③
│ • Text prompt│ ──→  │ Latent denoising at   │▓▓│   │ Native resolution│ ──→│ Test-time Diffuse-│──→│ Target resolution│
│ • Noise (input)│    │ native resolution     │▓▓│   │ Latents and   │    │ Denoise with FAM│   │ Latents       │
│             │      │ using fD              │  │   │ attention Maps│    │              │     │               │
└─────────────┘      └──────────────────────┘ └──┘   └──────────────┘    └──────────────┘     └──────────────┘
                                                                                                       │
                                                                                                       ↓
                                                     ┌──────────────┐                            ┌──────────┐
                                                     │ Target resolution│ ←──────────────────── │ Decoder  │
                                                     │ Image         │                           │          │
                                                     └──────────────┘④                          └──────────┘
```

## FIGURE 5B

26

Adapting a trained generative ML model

Obtain text prompt and first noisy image S100

Generate first image at initial resolution S102

Upsample the generated first image to produce a second image at a target resolution S104

Add noise to second image to generate a second noisy image at the target resolution S106

Generate third image at the target resolution by denoising the second noisy image and ensuring global structural features are maintained S108

FIGURE 6

FIGURE 7

**Fourier Domain**

FIGURE 8

FIGURE 9

**Standard attention computation**

FIGURE 10A

**Attention computation with AM module**

FIGURE 10B

EP 4 745 896 A1

| Method | Scaling Factor | FID↓ | KID↓ | FID$_c$ ↓ | KID$_c$ ↓ | CLIP ↑ | Latency(mins) |
|---|---|---|---|---|---|---|---|
| DemoFusion [3] | | 63.24 | 0.0084 | 36.75 | 0.0096 | 32.0 | 2.5 |
| AccDiffusion [15] | | 59.42 | 0.0068 | 37.23 | 0.0105 | 31.69 | 2.6 |
| FouriScale* [12] | | 78.54 | 0.0136 | 40.80 | 0.0130 | 29.8 | 2.3 |
| HiDiffusion [34] | $2 \times 2$ | 78.02 | 0.0136 | 51.41 | 0.0139 | 30.5 | **0.6** |
| HiDiffusion [34] + FAM diffusion | | 69.61 | 0.0140 | 34.26 | 0.0084 | 32.32 | 0.8 |
| SDXL [19] | | 59.47 | **0.0067** | 50.54 | 0.0136 | 30.6 | 0.8 |
| SDXL [19] + FAM diffusion | | **58.91** | 0.0072 | **33.96** | **0.0080** | **32.35** | 1 |
| DemoFusion [3] | | **68.82** | 0.0159 | 40.24 | 0.0122 | 32.0 | 8.6 |
| AccDiffusion [15] | | 73.47 | 0.0210 | 43.64 | 0.014 | 31.50 | 10 |
| FouriScale* [12] | | 73.57 | 0.0309 | 65.01 | 0.0357 | 28.54 | 6.2 |
| HiDiffusion [34] | $3 \times 3$ | 112.51 | 0.0325 | 68.84 | 0.021 | 28.43 | **1.5** |
| HiDiffusion [34] + FAM diffusion | | 76.28 | 0.0007 | 36.70 | **0.010** | **32.26** | 1.8 |
| SDXL [19] | | 78.41 | 0.0136 | 69.40 | 0.0210 | 28.44 | 2.2 |
| SDXL [19] + FAM diffusion | | 69.25 | **0.0007** | **36.40** | **0.010** | 32.25 | 2.5 |
| DemoFusion [3] | | 65.89 | 0.0087 | 48.44 | 0.0157 | 30.45 | 19.6 |
| AccDiffusion [15] | | 73.97 | 0.0090 | 54.80 | 0.0187 | 30.15 | 20.5 |
| FouriScale* [12] | | 105.24 | 0.0342 | 70.45 | 0.0223 | 27.86 | 14.7 |
| HiDiffusion [34] | $4 \times 4$ | 129.91 | 0.0483 | 156.98 | 0.0877 | 24.32 | **2.8** |
| HiDiffusion [34] + FAM diffusion | | 59.05 | 0.0074 | 44.65 | 0.0134 | 32.31 | 3.1 |
| SDXL [19] | | 160.10 | 0.0602 | 74.37 | 0.0242 | 26.70 | 5.4 |
| SDXL [19] + FAM diffusion | | **58.91** | **0.0073** | **43.65** | **0.0130** | **32.33** | 6.1 |

## FIGURE 11A

| Method | Scaling Factor | FID↓ | KID↓ | FID$_c$ ↓ | KID$_c$ ↓ | CLIP ↑ |
|---|---|---|---|---|---|---|
| DemoFusion [3] | | 81.69 | 0.0112 | 54.48 | 0.0165 | 29.3 |
| AccDiffusion [15] | | 70.42 | 0.0119 | 55.73 | 0.0205 | 29.0 |
| FouriScale* [12] | | 71.86 | 0.0302 | 63.28 | 0.0322 | 25.8 |
| HiDiffusion [34] | $2 \times 4$ | 118.56 | 0.038 | 65.46 | 0.021 | 26.3 |
| SDXL [19] | | 80.62 | 0.0236 | 67.46 | 0.0302 | 25.5 |
| SDXL [19] + FAM diffusion | | **63.48** | **0.0090** | **41.44** | **0.0115** | **30.6** |

## FIGURE 11B

FIGURE 12

FIGURE 13

Electronic Device 100

Processor(s) 102

Trained Generative ML model 106

Memory 104

FM 106A

AM 106B

User Interface(s) 110

Display 108

FIGURE 14

Europäisches
Patentamt

European
Patent Office

Office européen
des brevets

## EUROPEAN SEARCH REPORT

**Application Number**

EP 25 20 9901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ATHANASIOS TRAGAKIS ET AL: "Is One GPU Enough? Pushing Image Generation at Higher-Resolutions with Foundation Models", ARXIV.ORG, CORNELL UNIVERSITY LIBRARY, 201 OLIN LIBRARY CORNELL UNIVERSITY ITHACA, NY 14853, 24 October 2024 (2024-10-24), XP091900112, | 1-4,8,9, 13-15 | INV. G06T11/00 |
| Y | * the whole document * | 5-7,10 | |
| A | | 11,12 | |
| | ----- | | |
| Y | Shi Shuwei ET AL: "ResMaster: Mastering High-Resolution Image Generation via Structural and Fine-Grained Guidance", arXiv.org, 24 June 2024 (2024-06-24), pages 1-16, XP093369795, Retrieved from the Internet: URL:https://arxiv.org/pdf/2406.16476 [retrieved on 2024-06-24] | 5-7 | |
| | * the whole document * | | **TECHNICAL FIELDS SEARCHED (IPC)** |
| | ----- | | |
| Y,D | Lin Zhihang ET AL: "AccDiffusion: An Accurate Method for Higher-Resolution Image Generation", arXiv.org, 18 July 2024 (2024-07-18), pages 1-23, XP093369817, Retrieved from the Internet: URL:https://arxiv.org/pdf/2407.10738 [retrieved on 2024-07-18] * the whole document * | 10 | G06T |
| | ----- | | |

The present search report has been drawn up for all claims

| Place of search | Date of completion of the search | Examiner |
|---|---|---|
| Munich | 25 February 2026 | Lombardot, Benoit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUOYI DU** ; **DONGLIANG CHANG** ; **TIMOTHY HOSPEDALES** ; **YI-ZHE SONG** ; **ZHANYU MA**. DemoFusion: Democratising highresolution image generation with no $$$.. *In IEEE Conference on Computer Vision and Pattern Recognition*, 2024
- **SHEN ZHANG** ; **ZHAOWEI CHEN** ; **ZHENYU ZHAO** ; **YUHAO CHEN** ; **YAO TANG** ; **JIAJUN LIANG**. HiDiffusion: Unlocking higherresolution creativity and efficiency in pretrained diffusion models.. *In European Conference on Computer Vision*, 2024
- **ROBIN ROMBACH** ; **ANDREAS BLATTMANN** ; **DOMINIK LORENZ** ; **PATRICK ESSER** ; **BJORN OMMER**. High-resolution image synthesis with latent diffusion models.. *In IEEE Conference on Computer Vision and Pattern Recognition*, 2022
- **DUSTIN PODELL** ; **ZION ENGLISH** ; **KYLE LACEY** ; **ANDREAS BLATTMANN** ; **TIM DOCKHORN** ; **JONAS MULLER** ; **JOE PENNA** ; **ROBIN ROM-BACH**. SDXL: Improving latent diffusion models for high-resolution image synthesis. *In International Conference on Learning Representations*, 2024
- **ZHIHANG LIN** ; **MINGBAO LIN** ; **ZHAO MENG** ; **RONGRONG JI**. AccDiffusion: An accurate method for higher-resolution image generation.. *In European Conference on Computer Vision*, 2024

- **LINJIANG HUANG** ; **RONGYAO FANG** ; **AIPING ZHANG** ; **GUANGLU SONG** ; **SI LIU** ; **YU LIU** ; **HONGSHENG LI**. FouriScale: A frequency perspective on training-free high-resolution image synthesis.. *In European Conference on Computer Vision*, 2024
- **CHRISTOPH SCHUHMANN** ; **ROMAIN BEAU-MONT** ; **RICHARD VENCU** ; **CADE W GORDON** ; **ROSS WIGHTMAN** ; **MEHDI CHERTI** ; **THEO COOMBES** ; **AARUSH KATTA** ; **CLAYTON MULLIS** ; **MITCHELL WORTSMAN**. LAION-5B: An open large-scale dataset for training next generation image-text models.. *In Neural Information Processing Systems - Datasets and Benchmarks Track*, 2022
- **MARTIN HEUSEL** ; **HUBERT RAMSAUER** ; **THO-MAS UNTERTHINER** ; **BERNHARD NESSLER** ; **SEPP HOCHREITER**. GANs trained by a two time-scale update rule converge to a local Nash equilibrium.. *Neural Information Processing System*
- Learning transferable visual models from natural language supervision.. **ALEC RADFORD** ; **JONG WOOK KIM** ; **CHRIS HALLACY** ; **ADITYA RAMESH** ; **GABRIEL GOH** ; **SANDHINI AGARWAL** ; **GIRISH SASTRY** ; **AMANDA ASKELL** ; **PAMELA MISHKIN** ; **JACK CLARK et al.** In International conference on machine learning. PMLR, 2021, 8748-8763
- **CHENYANG SI** ; **ZIQI HUANG** ; **YUMING JIANG** ; **ZIWEI LIU**. FreeU: Free lunch in diffusion U-Net.. *In IEEE Conference on Computer Vision and Pattern Recognition*, 2024